(19) Europäisches Patentamt
European Patent Office
Office européen des brevets

(11) **EP 2 393 677 B1**

(12) **EUROPÄISCHE PATENTSCHRIFT**

(45) Veröffentlichungstag und Bekanntmachung des Hinweises auf die Patenterteilung:
**20.02.2013 Patentblatt 2013/08**

(21) Anmeldenummer: **09795793.0**

(22) Anmeldetag: **28.12.2009**

(51) Int Cl.:
**B60G 17/016** (2006.01)   **B60G 17/018** (2006.01)
**B60G 17/08** (2006.01)

(86) Internationale Anmeldenummer:
**PCT/EP2009/067965**

(87) Internationale Veröffentlichungsnummer:
**WO 2010/089007 (12.08.2010 Gazette 2010/32)**

(54) **VERFAHREN ZUR FAHRWERKREGELUNG EINES KRAFTFAHRZEUGS, SOWIE VORRICHTUNG ZUR DURCHFÜHRUNG**

METHOD FOR THE CHASSIS CONTROL OF A MOTOR VEHICLE, AND DEVICE FOR CARRYING OUT SAID METHOD

PROCÉDÉ POUR RÉGULER LA SUSPENSION D'UN VÉHICULE AUTOMOBILE ET DISPOSITIF POUR METTRE EN OEUVRE CE PROCÉDÉ

(84) Benannte Vertragsstaaten:
**AT BE BG CH CY CZ DE DK EE ES FI FR GB GR HR HU IE IS IT LI LT LU LV MC MK MT NL NO PL PT RO SE SI SK SM TR**

(30) Priorität: **22.07.2009   DE 102009027939**
**03.02.2009   DE 102009000572**

(43) Veröffentlichungstag der Anmeldung:
**14.12.2011   Patentblatt 2011/50**

(73) Patentinhaber: **Robert Bosch GmbH**
**70442 Stuttgart (DE)**

(72) Erfinder:
• **BUETTNER, Silke**
**71638 Ludwigsburg (DE)**
• **DURDEVIC, Ivica**
**F-14120 Mondeville (FR)**
• **BOEKER, Ralph**
**71634 Ludwigsburg (DE)**
• **SANKIN, Roman**
**Abstatt-Happenbach**
**74232 (DE)**
• **HABENICHT, Alexander**
**Stuttgart**
**70469 (DE)**
• **KNOOP, Michael**
**71638 Ludwigsburg (DE)**
• **WAGNER, Oliver**
**Allmersbach**
**71573 (DE)**

(56) Entgegenhaltungen:
EP-A1- 0 591 754       EP-A2- 1 391 332
DE-A1- 3 917 716       DE-A1- 4 112 004
DE-A1- 19 815 859      GB-A- 2 265 201
JP-A- 8 104 121        US-A1- 2002 133 277
US-A1- 2005 113 998

EP 2 393 677 B1

**Beschreibung**

Die Erfindung betrifft ein Verfahren zur Fahrwerkregelung eines Kraftfahrzeugs, das mindestens eine einen Fahrzeugaufbau tragende Radaufhängung mit einem Dämpfer aufweist.

Ferner betrifft die Erfindung eine Vorrichtung zur Fahrwerkregelung eines Kraftfahrzeugs, insbesondere zur Durchführung des genannten Verfahrens, wobei mindestens eine Radaufhängung des Kraftfahrzeugs einen verstellbaren Dämpfer aufweist.

Stand der Technik

Verfahren zur Fahrwerkregelung eines Kraftfahrzeugs sind aus dem Stand der Technik bekannt. Beispielsweise ist aus der DE 41 120 04 C2 ein Verfahren zur Ansteuerung eines in seiner Dämpfungscharakteristik verstellbaren Dämpfers eines Kraftfahrzeugs bekannt. Der Dämpfer weist zu diesem Zweck ein zur Verstellung der Dämpfungscharakteristik verstellbares Ventil auf, wobei die zur Optimierung der Eigenschaften des Kraftfahrzeugs zu tätigenden Umschaltungen zwischen den Dämpfungscharakteristiken davon abhängen, ob der Dämpfer druck- oder zugbelastet ist. Die Härte des Dämpfers, das heißt der Dämpfungsgrad, wird dabei so eingestellt, dass die Bewegung des Fahrzeugaufbaus abgedämpft wird.

Aus der europäischen Offenlegungsschrift EP 1 391 332 A2 ist weiterhin ein Verfahren zur Fahrwerksregelung eines Kraftfahrzeugs bekannt, bei welchem die Zugstufen und Druckstufen von Dämpfern der Vorderachse und der Hinterachse des Kraftfahrzeugs mit Bezug auf eine durch eine bestimmte Fahrzeugbewegung erzeugte Druckbelastung oder Zugbelastung in ihrer Härte verändert werden.

Offenbarung der Erfindung

Erfindungsgemäß ist mindestens eine einen Fahrzeugaufbau tragende Radaufhängung mit einem Dämpfer vorgesehen, der eine in der Härte verstellbare Zugstufe und eine in der Härte verstellbare Druckstufe aufweist, wobei für eine durch eine bestimmte Fahrzeugaufbau-Bewegung erzeugte Druckbelastung die Härte der Druckstufe verändert, insbesondere erhöht, und für eine durch die bestimmte Fahrzeugaufbau-Bewegung erzeugte, anschließend folgende Zugbelastung die Härte der Zugstufe zusätzlich verändert, insbesondere erhöht wird oder wobei für eine durch eine bestimmte Fahrzeugaufbau-Bewegung erzeugte Zugbelastung die Härte der Zugstufe verändert, insbesondere erhöht, und für eine durch die bestimmte Fahrzeugaufbau-Bewegung erzeugte, anschließend folgende Druckbelastung die Härte der Druckstufe zusätzlich verändert, insbesondere erhöht wird. Es ist somit ein Dämpfer vorgesehen, der zweistufig ausgebildet ist und dessen unterschiedliche Stufen, die Druckstufe und die Zugstufe, unabhängig voneinander in ihrer Härte beziehungsweise in ihrem Dämpfungsgrad verstellt werden. Die Druckstufe und die Zugstufe werden dabei in Abhängigkeit von der bestimmten Fahrzeugaufbau-Bewegung in ihrer Härte verstellt, wobei zunächst nur eine der Stufen während einer ersten Phase der Fahrzeugaufbau-Bewegung und anschließend die zweite Stufe während einer darauffolgenden Phase der Fahrzeugaufbau-Bewegung in ihrer Härte verstellt werden. Dadurch kann bei der jeweiligen Fahrzeugaufbau-Bewegungs-Phase (Druckbelastung oder Zugbelastung) der Dämpfer optimal arbeiten. Insbesondere die auf die Fahrzeugaufbau-Bewegung folgende Fahrzeugaufbau-Rückbewegung kann unabhängig gedämpft werden. Bei der bestimmten Fahrzeugaufbau-Bewegung kann es sich insbesondere um eine durch einen Bremsvorgang und/oder durch eine Kurverfahrt verursachte Fahrzeugaufbau-Bewegung handeln.

Erfindungsgemäß weist der Dämpfer mindestens ein erstes Ventil zum Verstellen der Härte der Druckstufe und mindestens ein zweites Ventil zum Verstellen der Härte der Zugstufe auf, wobei vor einer durch die bestimmte Fahrzeugaufbau-Bewegung erzeugten Druckbelastung des Dämpfers das erste Ventil zum Verändern, insbesondere Erhöhen, der Härte der Druckstufe geschaltet und während der anschließend erfolgenden Druckbelastung zusätzlich das zweite Ventil zum Verändern, insbesondere Erhöhen, der Härte der Zugstufe geschaltet wird, oder wobei vor einer durch die bestimmte Fahrzeugaufbau-Bewegung erzeugten Zugbelastung des Dämpfers das zweite Ventil zum Verändern, insbesondere Erhöhen, der Härte der Zugstufe und während der anschließend erfolgenden Zugbelastung das erste Ventil zum Verändern, insbesondere Erhöhen, der Härte der Druckstufe geschaltet wird. Bei einem derartigen Dämpfer erfolgt die Verstellung der Dämpferhärte beziehungsweise des Dämpfungsgrads immer im jeweiligen kraftlosen Leerhub. Somit erreicht der Stellbefehl beziehungsweise das Schalten des der entsprechenden Stufe zugeordneten Ventils nur dann seine Wirkung, wenn das Ventil im unbelasteten Zustand geschaltet wird. Vorliegend dient das erste Ventil zum Verstellen der Härte der Druckstufe und das zweite Ventil zum Verstellen der Härte der Zugstufe des Dämpfers. Vor einer erwarteten Druckbelastung des Dämpfers, die durch die bestimmte Fahrzeugaufbau-Bewegung erzeugt werden wird, wird erfindungsgemäß das erste Ventil zum Erhöhen der Härte der Druckstufe geschaltet, und dann, wenn die Druckbelastung durch die Fahrzeugaufbau-Bewegung tatsächlich erfolgt, wird das zweite Ventil zum Erhöhen der Härte der Zugstufe geschaltet. Der Wechsel zwischen der Druckbelastung und der Zugbelastung des Dämpfers tritt regelmäßig dann auf, wenn nach einer Fahrzeugaufbau-Bewegung auch eine fahrzeugaufbau-Rückbewegung erwartet wird. Durch das Schalten des ersten Ventils noch vor erfolgender Druckbelastung des Dämpfers und das zusätzliche Schalten des zweiten Ventils während der erfolgenden Druckbelastung des Dämpfers zum Erhöhen des jeweiligen Dämpfungsgrads, kann der Dämpfer während der Druckbelastung und während der Zugbelastung optimal arbeiten. Insbesondere die Fahrzeugaufbau-Rückbewegung kann unabhängig von der Fahrzeugaufbau-Bewegung gedämpft werden. Entsprechend wird erfindungsgemäß vor einer durch eine erwartete Fahrzeugaufbau-Bewegung erzeugten Zugbelastung des Dämpfers das zweite Ventil zum Erhöhen der Härte der Zugstufe und während der erfolgenden Zugbelastung das erste Ventil zum Erhöhen der Härte der Druckstufe geschaltet. Ob der Dämpfer während der Fahrzeugaufbau-Bewegung druck- oder zugbelastet wird, hängt im Wesentlichen von der Anregungsart und von seiner Anordnung beziehungsweise der Anordnung der ihn aufweisenden Radaufhängung an dem Kraftfahrzeug ab.

Zweckmäßigerweise werden beim Schalten des ersten und/oder des zweiten Ventils zum Einstellen der Härte des Dämpfers eine globale Bewegung des Fahrzeugaufbaus und/oder eine lokale Bewegung des Dämpfers berücksichtigt. Bei den lokalen Bewegungen des Dämpfers handelt es sich im Wesentlichen um durch Fahrbahnunebenheiten angeregte Bewegungen. Derartige Bewegungen treten in der Regel mit hoher Auslenkungsfrequenz auf. Dahingegen wird die globale Bewegung des Dämpfers vor allem durch Fahreingriffe des Fahrers des Kraftfahrzeugs und die damit verbundenen Fahrzeugaufbau-Bewegungen verursacht. Sie wird im Wesentlichen durch eine niedrigere Auslenkungsfrequenz im Vergleich zur lokalen Bewegung charakterisiert. Dabei liegen jedoch natürlich auch wechselseitige Wirkungen vor. So können auch Fahrbahnunebenheiten globale Fahrzeugaufbau-Bewegungen anregen und Fahreingriffe des Fahrers lokale Bewegungen des Dämpfers zur Folge haben. Bei dem vorteilhaften Verfahren werden also bevorzugt die lokalen Bewegungen des Dämpfers und/oder die globalen Fahrzeugaufbau-Bewegungen des Kraftfahrzeugs bestimmt beziehungsweise ermittelt und auf dieser Grundlage die Härte des Dämpfers eingestellt beziehungsweise gesteuert und/oder geregelt. Vorteilhafterweise weist der Dämpfer dazu eine ihm zugeordnete Elektronik mit eigenem Mikrocontroller und Anschluss an einen gemeinsamen Datenbus auf, sodass auf ein separates Zentralsteuergerät verzichtet werden kann und stattdessen ein vorhandenes Steuergerät des Fahrwerkbereichs (beispielsweise das ESP-Steuergerät oder ein Zentralsteuergerät der Fahrwerk-Domäne) verwendet wird und auf externe Zusatzsensorik, wie beispielsweise Vertikalbeschleunigungssensoren oder Federwegsensoren verzichtet werden kann. Die lokale Bewegung des Dämpfers wird vorteilhafterweise mittels einer dem Dämpfer zugeordneten Auswerteeinheit ausgewertet. Das Auswerten erfolgt direkt an dem Dämpfer beziehungsweise in der dem Dämpfer zugeordneten Auswerteeinheit. Auf diese Weise kann sehr schnell auf eine Veränderung der lokalen Bewegung reagiert werden, womit die Qualität der Steuerung und/oder Regelung des Dämpfers erhöht wird. Die Auswerteeinheit kann dem Dämpfer zugeordnet oder sogar in diesen integriert sein. Die globale Bewegung wird vorteilhafterweise in einem vorhandenen Steuergerät des Kraftfahrzeugs abgeschätzt. Die globale Bewegung, die durch Fahrereingaben, wie zum Beispiel Bremsen oder Lenken, bedingt ist, muss abgeschätzt werden, da sonst eine Steuerung und/oder Regelung des Dämpfers aufgrund gemessener Bewegungsdaten des Fahrzeugaufbaus stets den tatsächlichen Anforderungen hinterherlaufen würde. Eine Erkennung mit Aufbaubewegungssensoren und Totzeiten durch Signalübertragung und -verarbeitung wäre dafür zu langsam. Bei dem Abschätzen der globalen Bewegung können Größen wie Wankwinkel, Wankrate und/oder Wankbeschleunigung, Nickwinkel, Nickrate und/oder Nickbeschleunigung des Fahrzeugaufbaus bestimmt werden. Das Abschätzen erfolgt dabei vorausschauend, sodass die bestimmte, zu erwartende Fahrzeugaufbau-Bewegung bestimmt wird.

Vorteilhafterweise wird eine zu erwartende globale Bewegung in Abhängigkeit von Lenkradwinkel, Bremspedalstellung, Gaspedalstellung, Soll-Beschleunigung, Soll-Drehmoment und/oder mindestens einer Ist-Zustandsgröße des Kraftfahrzeugs abgeschätzt. Die genannten Größen sind durch den Fahrer direkt verursachte und leicht erfassbare Größen. Insbesondere werden der Lenkradwinkel, der Druck im Hauptbremszylinder, Anforderungen einer Bremsbetätigung durch Fahrerassistenzsysteme (beispielsweise adaptive cruise control: ACC), das angeforderte Motormoment (Soll-Drehmoment) und das Vorliegen eines Gangwechsels ausgewertet. Die Signale liegen üblicherweise in einem Fahrstabilisiersystem, wie beispielsweise in dem oben genannten ESP, bereits vor. Die Soll-Beschleunigung kann sowohl eine Längsbeschleunigung als auch eine Querbeschleunigung des Fahrzeugs betreffen und ebenso durch ein Fahrerassistenzsystem erfasst und/oder bestimmt werden. Auch die Bestimmung der Gierrate ist vorteilhaft und kann beispielsweise aus dem Lenkwinkel erfolgen.

Nach einer Weiterbildung der Erfindung wird ein eine globale Fahrzeugaufbau-Bewegung auslösender Bremsoder Beschleunigungsvorgang in Abhängigkeit von der Bremspedalstellung und/oder der Gaspedalstellung bestimmt beziehungsweise abgeschätzt. Aus der Bremspedalstellung ergibt sich eine negative Soll-Beschleunigung und aus der Gaspedalstellung eine positive Soll-Beschleunigung des Kraftfahrzeugs, wobei die negative Soll-Beschleunigung (=Verzögerung) auch über den Bremsdruck bestimmt werden kann. Durch den Bremsvorgang wird eine Nickbewegung des Fahrzeugaufbaus um eine Querachse erzeugt. Mittels des oben beschriebenen Verfahrens ist es möglich, die Fahrzeugaufbau-Bewegung während eines Bremsvorgangs entsprechend abzudämpfen. Mit Bremsbeginn, sobald also durch die Bremspedalstellung ein Bremswunsch erkannt ist, werden das erste Ventil von Dämpfern an der Vorderachse (Druckstufe) und das zweite Ventil von Dämpfern an der Hinterachse (Zugstufe) zum Erhöhen der Härte beziehungsweise des Dämpfungsgrades geschaltet. Dadurch wird die Nickbewegung des Fahrzeugaufbaus nach vorne beim erfolgenden Bremsvorgang gedämpft. Wird der Bremsvorgang bis zum Stillstand des Fahrzeugs durchgeführt, so nickt der Fahrzeugaufbau anschließend, nachdem das Fahrzeug zum Stillstand gekommen ist, nach hinten. Erfindungsgemäß werden daher bei einem Bremsvorgang kurz vor dem Stillstand des Kraftfahrzeugs das erste Ventil von den Dämpfern an der Hinterachse (Druckstufe) und das zweite Ventil von den Dämpfern an der Vorderachse (Zugstufe) des Kraftfahrzeugs zum Erhöhen der Härte geschaltet, während mittels des jeweils zweiten Ventils die Zugstufe der Dämpfer an der Hinterachse und mittels des jeweils ersten Ventils die Druckstufe der Dämpfer an der Vorderachse in ihren jeweiligen Normalzustand geschaltet werden. Die erwartete Fahrzeugaufbau-Bewegung ist in diesem Fall das Nach-Hinten-Nicken des Fahrzeugaufbaus, wenn das Fahrzeug zum Stillstand kommt. Wie oben beschrieben werden dann zweckmäßigerweise das erste und das zweite Ventil derart geschaltet, dass der Dämpfungsgrad der Druckstufe des Dämpfers an der Hinterachse und der Dämpfungsgrad der Zugstufe an der Vorderachse erhöht sind. Entsprechend des oben beschriebenen vorteilhaften Verfahrens zur Fahrwerkregelung werden dann erfindungsgemäß bei Erreichen des Stillstands, also während der Nickbewegung des Fahrzeugaufbaus nach hinten, das zweite Ventil von den Dämpfern an der Hinterachse und das erste Ventil von den Dämpfern an der Vorderachse des Kraftfahrzeugs zum Erhöhen der Härte zusätzlich geschaltet. Mit anderen Worten wird zusätzlich der Dämpfungsgrad der Zugstufe der Dämpfer an der Hinterachse und der Dämpfungsgrad der Druckstufe der Dämpfer an der Vorderachse für die Fahrzeugaufbau-Rückbewegung, die auf das Nach-Hinten-Nicken erfolgt, erhöht. Wenn der Fahrzeugaufbau somit nach dem bereits gedämpften Nach-Hinten-Nicken zurück nach vorne nickt, erfolgt das Zurücknicken ebenfalls gedämpft. Insgesamt werden also vorteilhafterweise a) mit Bremsbeginn die Härte der Druckstufen an der Vorderachse und die Härte der Zugstufen an der Hinterachse erhöht, b) kurz vor Stillstand des Fahrzeugs die Härte der Zugstufen an der Vorderachse und der Druckstufen an der Hinterachse erhöht, c) während der Fahrzeugaufbau nach dem Stillstand nach hinten nickt die restlichen Druck- und Zugstufen in ihrer Härte erhöht und d) nach Abklingen der Nickbewegung alle Druckstufen und Zugstufen der Dämpfer in ihre Normalstellung (normaler Dämpfungsgrad) geschaltet. Wobei während b) zweckmäßigerweise die Druckstufen an der Vorderachse und die Zugstufen an der Hinterachse in ihren Normalzustand geschaltet werden. Dadurch wird dem initialen Nickmoment des Fahrzeugaufbaus nach dem Bremsen in den Stillstand entgegengewirkt und die dadurch erzeugten Nickschwingungen gedämpft. Hierzu werden insbesondere Bremsdruck und Längsgeschwindigkeit des Kraftfahrzeugs betrachtet, wobei dafür nur die ESP-Sensorik verwendet werden kann. Durch die Verstellung der einzelnen Dämpferstufen (Zug- oder Druckstufe) wird ein Gegenmoment erzeugt. Da das Gegenmoment, aufgrund der konstruktiven Gestaltung des Dämpfers, nicht aktiv aufgebaut werden kann, wirkt das Gegenmoment nur als Reaktionsmoment. Die Einstellung der jeweiligen Stufe (Zug- oder Druckstufe) muss vor der relativen Bewegung zwischen Rad und Fahrzeugaufbau erfolgen, da die Ventile in der Bewegung nicht geschaltet werden können. Wie oben beschrieben werden dabei die Druck- und Zugstufen der entgegengesetzten Achsen prädiktiv härter eingestellt.

Nach einer Weiterbildung der Erfindung wird eine eine globale Bewegung auslösende Kurvenfahrt in Abhängigkeit von dem Lenkradwinkel abgeschätzt beziehungsweise bestimmt. Der Fahrzeugaufbau erfährt eine globale Anregung, sobald der Fahrer eine laterale Kursänderung durch den Steuereingriff am Lenkrad durch Verstellen des Lenkradwinkels vornimmt. Diese Anregung führt zu einer Drehbewegung des Fahrzeugaufbaus um die Fahrzeuglängsachse (Wanken) infolge seiner Trägheit.

Vorteilhafterweise werden bei Einleiten einer Kurvenfahrt durch Verändern des Lenkradwinkels das erste Ventil von mindestens einem in der Kurve außen liegenden Dämpfer und das zweite Ventil von mindestens einem in der Kurve innen liegenden Dämpfer zum Erhöhen der Härte geschaltet. Hierbei findet also eine fahrzeugseitenabhängige Ansteuerung der Dämpfer statt, wohingegen beim Bremsvorgang eine achsenabhängige Ansteuerung durchgeführt wird. Bei erfolgender Kurvenfahrt, also wenn eine Wankbewegung des Fahrzeugaufbaus stattfindet, werden das zweite Ventil des mindestens einen in der Kurve außen liegenden Dämpfers und das erste Ventil des mindestens einen in der Kurve innen liegenden Dämpfers zum Erhöhen der Härte geschaltet. Mit anderen Worten wird bei Einleiten einer Kurvenfahrt eine Druckbelastung der in der Kurve außen liegenden Dämpfer erwartet, und somit das erste Ventil zum Erhöhen der Härte der Druckstufe geschaltet, während die Härte der Zugstufe des Dämpfers auf der in der Kurve innen liegenden Seite, wo der Dämpfer eine Zugbelastung erfährt, zum Erhöhen der Härte geschaltet wird. Bevor der Fahrzeugaufbau zurückschwingt beziehungsweise die Fahrzeugaufbau-Rückbewegung erfolgt, werden die restlichen Stufen der Dämpfer ebenfalls zum Erhöhen der Härte geschaltet. Dadurch wird die Wankbewegung des Fahrzeugaufbaus während einer Kurvenfahrt minimiert und der Fahrkomfort erhöht.

Nach einer vorteilhaften Weiterbildung der Erfindung werden das erste und/oder das zweite Ventil erst bei Überschreiten eines bestimmbaren, auf die Belastung des Dämpfers bezogenen Schwellwerts zum Erhöhen der Härte geschaltet. Dadurch wird verhindert, dass die Zug- und/oder die Druckstufe des Dämpfers auch schon bei nur kleinen Auslenkungen in ihrem Dämpfungsgrad verstellt werden. Insbesondere wird hierdurch verhindert, dass kleine, für den gesamten fahrzeugaufbau eher vernachlässigbare lokale Auslenkungen beziehungsweise Bewegungen der Dämpfer stets zu einer Verstellung der Härte führen.

Vorteilhafterweise werden das erste und/oder das zweite Ventil zum Verringern der Härte geschaltet, wenn der Schwellwert über einen bestimmten Zeitraum nicht erreicht wird. Dadurch wird der oder werden die Dämpfer wieder auf ihre Ursprungseinstellung zurückgeschaltet.

Eine Weiterbildung der Erfindung sieht vor, dass die lokale Bewegung anhand von mindestens einem Dämpferdruck bestimmt wird. An dem Dämpfer sind also Mittel vorgesehen, um mindestens einen Dämpferdruck zu bestimmen. Der Dämpferdruck kann beispielsweise in der dem Dämpfer zugeordneten Auswerteeinheit ausgewertet werden, um die lokale Bewegung zu bestimmen. Dabei kann auch eine (relative) Änderung des Dämpferdrucks ausgewertet werden.

Eine Weiterbildung der Erfindung sieht vor, dass die lokale Bewegung eine Vertikalbewegung an einem Befestigungspunkt des Dämpfers ist. Der Befestigungspunkt des Dämpfers gibt die Stelle an, an welcher der Dämpfer an dem Kraftfahrzeug, insbesondere dem Aufbau des Kraftfahrzeugs, befestigt ist. Dabei wird lediglich die Vertikalgeschwindigkeit betrachtet. Alle anderen Geschwindigkeitskomponenten entfallen oder werden in die Vertikalgeschwindigkeit eingerechnet.

Eine Weiterbildung der Erfindung sieht vor, dass die lokale Bewegung aus einer Dämpferkraft und/oder einer Druckdifferenz, insbesondere unter Beachtung einer Kennlinie des Dämpfers, berechnet wird. Es wird also zunächst die Dämpferkraft und/oder die Druckdifferenz bestimmt. Dies kann beispielsweise über die Bestimmung mehrerer Drücke des Dämpfers erfolgen, wobei es vorteilhaft ist, den Druck in der Druckstufe und den Druck in der Zugstufe des Dämpfers zu bestimmen. Die lokale Bewegung, beschrieben durch eine Dämpfergeschwindigkeit - das heißt die Relativgeschwindigkeit zwischen einem Dämpferkolben und einem Dämpferrohr - kann mittels Inversion der Dämpferkennlinie aus der Dämpferkraft oder aus dem Differenzdruck bestimmt werden, wobei eine Kennlinie, die zur aktuellen Ventilstellung gehört, verwendet wird. Auch eine Kombination der genannten Berechnungsansätze ist möglich.

Eine Weiterbildung der Erfindung sieht vor, dass die Dämpferkraft und/oder die Druckdifferenz aus einem Druck in einer oberen Kammer des Dämpfers und einem Druck in einer unteren Kammer des Dämpfers bestimmt wird. Es sind also Mittel vorgesehen, um den Dämpferdruck sowohl in der Zugstufe als auch in der Druckstufe zu bestimmen. Dabei entspricht der Druck in der oberen Kammer dem Druck der Zugstufe und der Druck in der unteren Kammer dem Druck der Druckstufe.

Eine Weiterbildung der Erfindung sieht vor, dass der Dämpfer ein Einrohrdämpfer ist und insbesondere dessen Dämpferweg abgeschätzt wird. Bei Einrohrdämpfern lässt sich unabhängig von der Dämpferkraft und der Dämpfergeschwindigkeit auch der Dämpferweg abschätzen. Dazu wertet man den mittleren Druck aus, der aufgrund des Eindringens der Kolbenstange in den Dämpfer mit zunehmendem Einfederweg steigt. Der Volumenausgleich erfolgt bei Einrohrdämpfern über ein Gasvolumen, das um das Volumen der eindringenden Kolbenstange verringert wird.

Eine Weiterbildung der Erfindung sieht vor, dass die lokale Bewegung für hochfrequente Anteile und/oder die globale Bewegung für niederfrequente Anteile ausgewertet wird. Die hochfrequenten Anteile sind beispielsweise Frequenzen im Bereich der Radeigenfrequenz, also etwa 10 bis 15 Hz, während die niederfrequenten Anteile Frequenzen im Bereich der Eigenfrequenz des Aufbaus des Kraftfahrzeugs sind. Letztere liegen etwa im Bereich von 1 bis 2 Hz. Zu diesem Zweck kann mindestens ein Filter vorgesehen sein, der für die lokale Bewegung lediglich die hochfrequenten Anteile und/oder für die globale Bewegung lediglich die niederfrequenten Anteile passieren lässt.

Eine Weiterbildung der Erfindung sieht vor, dass aus der lokalen Bewegung und der globalen Bewegung jeweils eine Dämpferhärte für die Druck- und für die Zugstufe bestimmt wird. Die Dämpferhärte wird getrennt für die globale Bewegung und die lokale Bewegung bestimmt. Zu diesem Zweck sind verschiedene Auswertepfade vorgesehen. Ein Auswertepfad wird für die lokale Bewegung und ein weiterer für die globale Bewegung verwendet. Aus beiden Auswertepfaden resultiert jeweils eine Dämpferhärte für die Druck- und für die Zugstufe.

Eine Weiterbildung der Erfindung sieht vor, dass die Dämpferhärte aus der lokalen Bewegung und die Dämpferhärte aus der globalen Bewegung zu einer Gesamtdämpferhärte zusammengefasst werden. Nach dem Bestimmen der Dämpferhärte sowohl für die lokale Bewegung als auch für die globale Bewegung werden diese also zu der Gesamtdämpferhärte zusammengefasst. Dabei wird vorteilhafterweise die Dämpferhärte und/oder die Gesamtdämpferhärte für die Zugstufe und die Druckstufe getrennt behandelt. Die Dämpferhärte ist üblicherweise ein Wert im Bereich von 0 bis 1, wobei 0 für sehr weich und 1 für sehr hart steht.

Eine Weiterbildung der Erfindung sieht vor, dass der Dämpfer entsprechend der Gesamtdämpferhärte eingestellt wird. Der Dämpfer wird so gesteuert und/oder geregelt, dass er sich entsprechend der bestimmten Gesamtdämpferhärte verhält. Er wird also nicht lediglich gemäß der Dämpferhärte für die lokale Bewegung oder der Dämpferhärte für die globale Härte eingestellt, sondern entsprechend der Kombination der beiden Werte.

Die erfindungsgemäße Vorrichtung zeichnet sich durch mindestens eine einen Fahrzeugaufbau tragende Radaufhängung mit einem Dämpfer aus, der eine in der Härte verstellbare Zugstufe und eine in der Härte verstellbare Druckstufe aufweist, wobei für eine durch eine bestimmte Fahrzeugaufbau-Bewegung erzeugt Druckbelastung des Dämpfers die Härte der Druckstufe verändert, insbesondere erhöht, und für eine durch die bestimmte Fahrzeugaufbau-Bewegung erzeugte, anschließend folgende Zugbelastung des Dämpfers die Härte der Zugstufe zusätzlich verändert, insbesondere erhöht wird oder wobei für eine durch eine bestimmte Fahrzeugaufbau-Bewegung erzeugte Zugbelastung des Dämpfers die Härte der Zugstufe verändert, insbesondere erhöht, und für eine durch die bestimmte Fahrzeugaufbau-Bewegung erzeugte, anschließend folgende Druckbelastung des Dämpfers die Härte der Druckstufe zusätzlich verändert, insbesondere erhöht wird.

Erfindungsgemäß weist der Dämpfer mindestens ein erstes Ventil zum Verstellen der Härte der Druckstufe und mindestens ein zweites Ventil zum Verstellen der Härte der Zugstufe auf, wobei vor einer durch die bestimmte

Fahrzeugaufbau-Bewegung erzeugten Druckbelastung des Dämpfers das erste Ventil zum Verändern, insbesondere Erhöhen, der Härte der Druckstufe geschaltet und während der erfolgenden Druckbelastung zusätzlich das zweite Ventil zum Verändern. insbesondere Erhöhen, der Härte der Zugstufe geschaltet wird, oder vor einer durch eine bestimmte Fahrzeugaufbau-Bewegung erzeugten Zugbelastung des Dämpfers das zweite Ventil zum Verändern, insbesondere Erhöhen, der Härte der Zugstufe und während der erfolgenden Zugbelastung das erste Ventil zum Verändern, insbesondere Erhöhen, der Härte der Druckstufe geschaltet wird, wobei bei einem Bremsvorgang vor dem Stillstand des Kraftfahrzeugs das jeweils erste Ventil von Dämpfern an einer Hinterachse und das jeweils zweite Ventil von Dämpfern an einer Vorderachse des Kraftfahrzeugs zum Erhöhen der Härte geschaltet werden, und dass bei Erreichen des Stillstands das zweite Ventil von den Dämpfern an der Hinterachse und das erste Ventil von den Dämpfern an der Vorderachse des Kraftfahrzeugs zum Erhöhen der Härte zusätzlich geschaltet werden.

Eine Weiterbildung der Erfindung sieht vor, dass der Dämpfer eine Auswerteeinheit und/oder mindestens eine Druckmesseinrichtung aufweist und/oder mittels der Auswerteeinheit eine Endstufe mindestens eines Ventils des Dämpfers einstellbar ist. Die Auswerteeinheit, die Druckmesseinrichtung - also Mittel zum Messen des Drucks - und das Ventil zusammen mit der ihm zugeordneten Endstufe sind dem Dämpfer zugeordnet und/oder an diesem integriert.

Eine Weiterbildung der Erfindung sieht vor, dass die Auswerteeinheit mit einem vorhandenen, die globale Bewegung abschätzenden Steuergerät des Kraftfahrzeugs über einen Datenbus verbunden ist. Das Steuergerät ist ein bereits vorhandenes Steuergerät des Kraftfahrzeugs, beispielsweise das ESP-Steuergerät oder das Zentralsteuergerät der Fahrwerk-Domäne. Mit Hilfe dieses Steuergeräts wird die globale Bewegung abgeschätzt, das heißt, es ist kein separates Zentralsteuergerät für die Vorrichtung zur Fahrwerkregelung vorgesehen. Die Auswerteeinheit des Dämpfers ist mit diesem Steuergerät über einen Datenbus verbunden, sodass Daten zwischen diesen ausgetauscht werden können. Diese Daten umfassen beispielsweise die Dämpferhärte und die Gesamtdämpferhärte und/oder Werte für die lokale Bewegung des Dämpfers und/oder die globale Bewegung des Kraftfahrzeugs.

Die Erfindung wird im Folgenden anhand der in der Zeichnung dargestellten Ausführungsbeispiele näher erläutert, ohne dass eine Beschränkung der Erfindung erfolgt. Es zeigen:

Figur 1        eine schematische Darstellung einer Vorrichtung beziehungsweise eines Verfahrens zur Fahrwerkregelung eines Kraftfahrzeugs,

Figur 2        eine Funktionsstruktur der Vorrichtung und des Verfahrens,

Figur 3        ein Einrohrdämpfer, wie er beispielsweise zusammen mit dem Verfahren und/oder der Vorrichtung eingesetzt werden kann,

Figur 4        ein Ablaufdiagramm für einen Block der aus Figur 2 bekannten Funktionsstruktur,

Figur 5        ein Ablaufdiagramm für einen weiteren Block der Funktionsstruktur,

Figuren 6A und B        ein schematisches Ausführungsbeispiel des vorteilhaften Verfahrens bei einer Nickbewegung,

Figur 7        ein Blockschaltbild eines Zustandsautomaten,

Figur 8        ein Blockschaltbild zur Durchführung des Verfahrens bei einem Nickvorgang,

Figur 9        ein Ausführungsbeispiel zur Durchführung des Verfahrens bei einer Wankbewegung und

Figur 10        ein Blockschaltbild zur Durchführung des Verfahrens bei einem Wankvorgang.

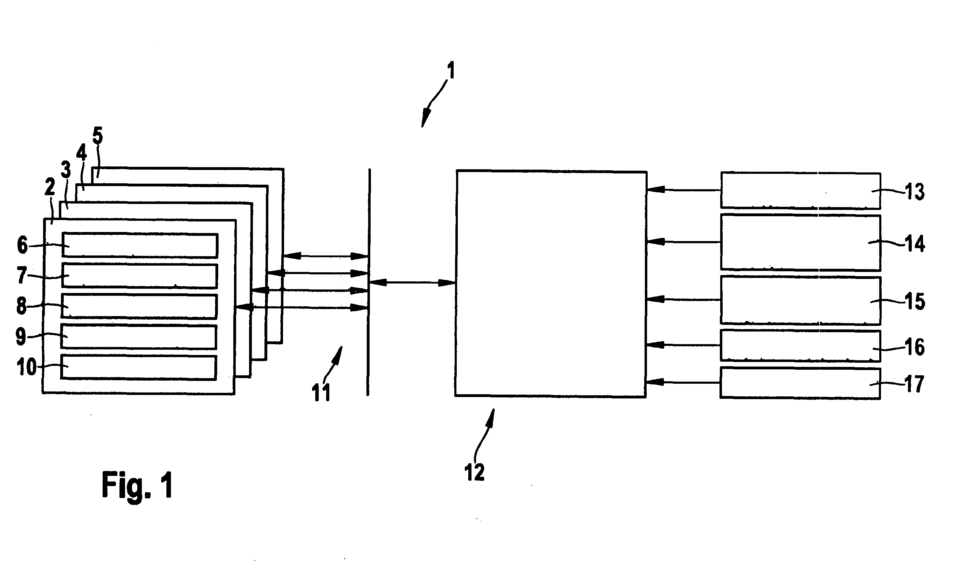

Die Figur 1 zeigt eine Systemstruktur 1, wie sie beispielsweise bei dem erfindungsgemäßen Verfahren und/oder der erfindungsgemäßen Vorrichtung eingesetzt werden kann. Vorgesehen sind vier Dämpfer 2, 3, 4 und 5, wobei jeder Dämpfer einem Rad eines Kraftfahrzeugs (nicht dargestellt) zugeordnet ist. Die Dämpfer 2, 3, 4 und 5 sind zwischen dem Rad und einem Aufbau des Kraftfahrzeugs vorgesehen, sind also Bestandteil einer Radaufhängung (ebenfalls nicht dargestellt). Jeder Verstelldämpfer verfügt über Drucksensoren 6, einen Mikroprozessor 7, zwei Endstufen 8, mittels welchen jeweils ein Ventilantrieb 9 und über diesen ein Ventil 10 betätigt werden kann. Jeder der Drucksensoren 6, der Endstufen 8, der Ventilantriebe 9 und der Ventile 10 sind jeweils einer Zug- und einer Druckstufe des Dämpfers 2 zugeordnet. Einer der Drucksensoren 6 dient also dazu, den Druck in der Druckstufe zu bestimmen, während der andere der Drucksensoren 6 zur Bestimmung des Drucks in der Zugstufe dient. Mittels Endstufe 8, Ventilantrieb 9 und Ventil 10 kann jeweils die Härte der Druckstufe und/oder der Zugstufe des Dämpfers 2 eingestellt werden.

Die Endstufen 8 werden dabei von dem Mikroprozessor 7 angesteuert, der sowohl Signale der Drucksensoren 6 auswertet, als auch übereinen Datenbus 11 mit einem vorhandenen Steuergerät 12 des Kraftfahrzeugs verbunden ist und mit diesem Daten austauscht. Das Steuergerät 12 ist beispielsweise ein ESP-Steuergerät. Das Steuergerät 12 empfängt zusätzlich Daten von einem Lenkwinkelsensor 13, einem Sensor zur Bestimmung der Gierrate und/oder der Querbeschleunigung und/oder einem Drucksensor 15 zur Bestimmung des Drucks in einem Bremszylinder (nicht dargestellt).

Das Steuergerät bekommt weiterhin Daten von einer Motorsteuerung 16 und einer Getriebesteuerung 17. Die Motorsteuerung 16 kann beispielsweise das angeforderte Motormoment und/oder eine momentane Drehzahl eines Antriebsaggregats des Kraftfahrzeugs liefern. Die Getriebesteuerung 17 teilt dem Steuergerät 12 beispielsweise mit, welcher Gang eingelegt ist und ob momentan ein Gangwechsel durchgeführt wird.

Mittels des Steuergeräts 12 wird die globale Bewegung beziehungsweise die Fahrzeugaufbau-Bewegung bestimmt und eine Dämpferhärte aus der globalen Bewegung bestimmt. Der Mikroprozessor 7 des Dämpfers 2, 3, 4 oder 5 bestimmt die lokale Bewegung, insbesondere aus den Daten der Drucksensoren 6, und berechnet aus dieser ebenfalls eine Dämpferhärte. Die Dämpferhärte aus der globalen Bewegung wird von dem Steuergerät 12 über den Datenbus 11 an den Mikroprozessor 7 übertragen. Dieser bestimmt aus der Dämpferhärte für die lokale Bewegung und der Dämpferhärte für die globale Bewegung eine Gesamtdämpferhärte. Diese Gesamtdämpferhärte wird anschließend mittels der Endstufe 8, des Ventilantriebs 9 und des Ventils 10 an dem Dämpfer 2, 3, 4 oder 5 eingestellt. Dabei wird die Dämpferhärte beziehungsweise die Gesamtdämpferhärte jeweils für die Zugstufe und die Druckstufe des Dämpfers 2, 3, 4 oder 5 bestimmt. Die Drucksensoren 6, der Mikroprozessor 7, die Endstufen 8, die Ventilantriebe 9 und die Ventile 10 eines jeden Dämpfers 2, 3, 4, 5 sind dem jeweiligen Dämpfer 2, 3, 4 oder 5 zugeordnet, also dämpferlokale Verrichtungen. Dagegen ist das Steuergerät 12 zur Auswertung der globalen Bewegung des Kraftfahrzeugs vorgesehen und daher ein zentraler Bestandteil. Die globale Bewegung kann daher auch als zentrale Bewegung bezeichnet werden. Der Dämpfer 2 ist vorne links an dem Kraftfahrzeug vorgesehen, der Dämpfer 3 vorne rechts, der Dämpfer 4 hinten links und der Dämpfer 5 hinten rechts.

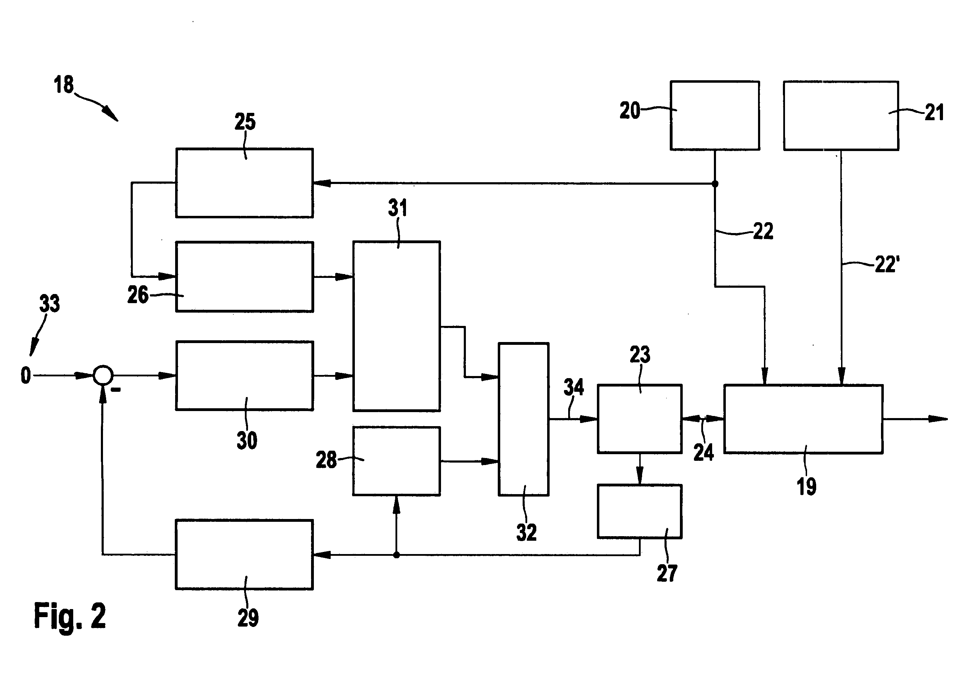

Die Figur 2 zeigt eine Funktionsstruktur 18, wie sie bei dem erfindungsgemäßen Verfahren beziehungsweise der erfindungsgemäßen Vorrichtung vorgesehen sein kann. Das Kraftfahrzeug, beziehungsweise dessen Räder und Aufbau, sind durch den Kasten 19 symbolisiert. Auf das Kraftfahrzeug wirken verschiedene Einflussfaktoren, beispielsweise der Fahrer - symbolisiert durch den Kasten 20 - und die Fahrbahn - symbolisiert durch den Kasten 21. Die jeweiligen Einflüsse sind durch die Pfeile 22 und 22' gekennzeichnet. Die Räder und der Aufbau des Kraftfahrzeugs stehen in Wechselwirkung mit den Dämpfern 2, 3, 4 und 5, die durch den Kasten 23 dargestellt sind, wobei die Wechselwirkung durch den Pfeil 24 symbolisiert ist. Der Kasten 20 symbolisiert also die Einflüsse, die durch den Fahrer des Kraftfahrzeugs hervorgerufen werden, während der Kasten 21 die Fahrbahneinflüsse beschreibt. In einem ersten Funktionsblock 25 wird der Einfluss des Fahrers (Kasten 20) dazu genutzt, die globale Bewegung beziehungsweise die Fahrzeugaufbau-Bewegung abzuschätzen. Dies erfolgt aufgrund der Daten, die dem Steuergerät 12 aus dem Lenkwinkelsensor 13, dem Sensor 14, dem Drucksensor 15, der Motorsteuerung 16 und/oder der Getriebesteuerung 17 zur Verfügung stehen.

Die vorausschauende Abschätzung ist erforderlich, da eine wirkungsvolle Dämpfung der globalen Bewegung nur in der Bewegung selbst erfolgen kann. Eine Erkennung mit dem Aufbau zugeordneten Bewegungssensoren wäre bedingt durch Totzeiten durch Signalübertragung und -verarbeitung zu langsam. Der erste Funktionsblock 25 stellt Größen der globalen Bewegung zur Verfügung, beispielsweise Wankwinkel, Wankrate, Wankbeschleunigung und/oder Nickwinkel, Nickrate, Nickbeschleunigung und/oder Gierwinkel, Gierrate, Gierbeschleunigung. Die in dem ersten Funktionsblock 25 abgeschätzten Größen werden in den zweiten Funktionsblock 26 weitergeleitet. In diesem werden aus den abgeschätzten Größen die Anforderungen an die Einstellung des Dämpfers für die Druck- und die Zugstufe der vier Dämpfer 2, 3, 4 und 5 bestimmt. Beispielsweise wird bei einer vorhergesagten Rollbewegung nach rechts die Druckstufe der Dämpfer 3 und 5 auf der rechten Seite des Kraftfahrzeugs und die Zugstufe der Dämpfer 2 und 4 auf der linken Seite des Kraftfahrzeugs verhärtet. Bei Vorhersage des Rückschwungs der Rollbewegung (Rückbewegung) werden zusätzlich die anderen Dämpfereinstellungen verhärtet. Bei einer vorhergesagten Nickbewegung nach vorne wird die Druckstufe der Dämpfer 2 und 3 vorne an dem Kraftfahrzeug und die Zugstufe der Dämpfer 4 und 5 hinten am Kraftfahrzeug verhärtet. Der erste Funktionsblock 25 und der zweite Funktionsblock 26 werden in das als vorhanden vorausgesetzte Steuergerät 12 des Fahrstabilisierungssystems (beispielsweise ESP) oder in ein vorhandenes Zentralsteuergerät der Fahrwert-Domäne integriert. Somit liegt nun die Dämpferhärte aus der globalen Bewegung jeweils für die Druckstufe und die Zugstufe der Dämpfer 2, 3, 4 und 5 vor.

In einem dritten Funktionsblock 27 wird eine Bewegung der Dämpfer 2, 3, 4 und 5 sowie eine auf die Dämpfer 2, 3, 4 und 5 wirkende Kraft bestimmt. Dies erfolgt aus den Drücken, die mittels der Drucksensoren 6 bestimmt wurden. Dabei ist der Druckstufe ein Druck $p_{oben}$ und der Zugstufe ein Druck $p_{unten}$ zugeordnet. Die Dämpferbewegung wird beispielsweise durch die Größen Dämpfergeschwindigkeit und/oder Dämpferweg (Einfederweg) beschrieben. Vor der Verarbeitung der mittels der Drucksensoren 6 bestimmten Drücke werden diese zunächst aufbereitet, das heißt, eventuell um einen Offset korrigiert und/oder gefiltert, um Messrauschen zu unterdrücken. Außerdem kann eine Überwachung der Drücke eingesetzt werden, um fehlerhaft bestimmte Drücke von der folgenden Auswertung auszuschließen. Die Dämpferkraft $F_{Dämpfer}$ kann anhand der Gleichung

$$F_{Dämpfer} = A_{oben} \cdot p_{oben} - A_{unten} \cdot p_{unten}$$

bestimmt werden, wobei $A_{oben}$ und $A_{unten}$ die oberen und unteren Querschnittsflächen eines Dämpferkolbens des Dämpfers 2 sind.

Die Dämpfergeschwindigkeit $v_D$, das heißt einer Relativgeschwindigkeit zwischen dem Dämpferkolben und einem Dämpferrohr des Dämpfers 2, 3, 4 und 5 kann mit zwei verschiedenen Ansätzen bestimmt werden. Zunächst kann die Dämpferkraft $F_D$ mittels Inversion der Dämpferkennlinie $F_D = f_1$ ($v_D$, Stellung des Ventils 10), die zur aktuellen Ventilstellung gehört, bestimmt werden. Anschließend wird die Dämpfergeschwindigkeit $v_D$ mittels der Gleichung

$$v_D = f_1^{-1} \, (F_D, \text{ Stellung des Ventils 10})$$

berechnet.

Ebenso kann die Berechnung der Dämpfergeschwindigkeit $v_D$ aus einem Differenzdruck $\Delta p = p_{oben} - p_{unten}$ mithilfe einer Kennlinie, die zur aktuellen Stellung des Ventils 10 gehört, vorgesehen sein. Dies erfolgt anhand der Gleichung

$$v_D = f_2 \, (\Delta p, \text{ Stellung des Ventils 10}).$$

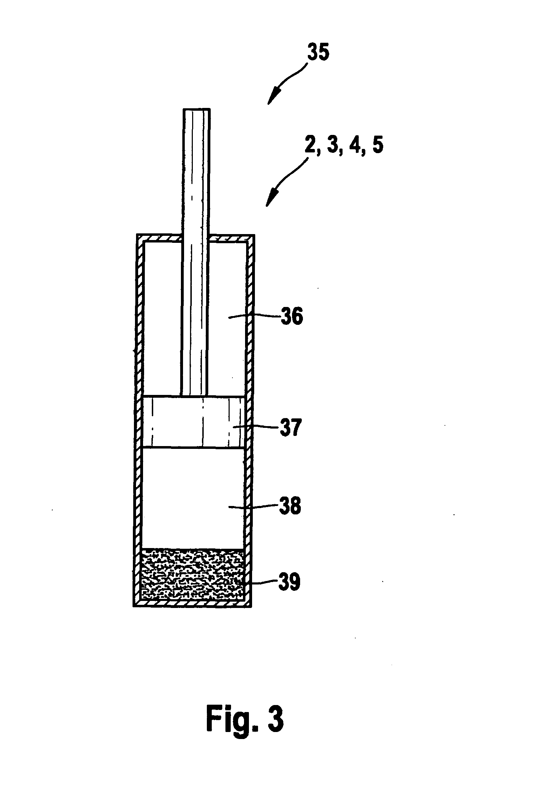

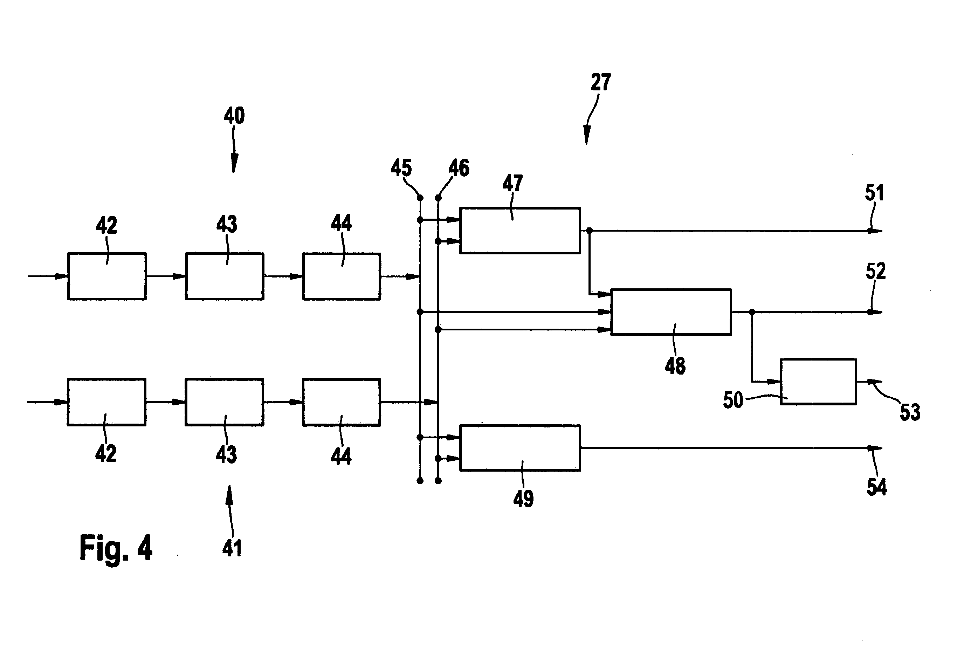

Diese beiden Berechnungsansätze können einzeln oder in Kombination verwendet werden. Im Falle einer Kombination entscheidet eine Arbitrierungslogik, welcher Wert beziehungsweise Mittelwert verwendet wird. Sind die Dämpfer 2, 3, 4, 5 Einrohrdämpfer, so lässt sich unabhängig von Dämpferkraft und Dämpfergeschwindigkeit auch der Dämpferweg $Z_{Dämpfer}$ schätzen. Dazu wertet man den mittleren Druck ($p_{unten} + p_{oben}$)/2 aus, der aufgrund des Eindringens der Kolbenstange in den Dämpfer 2, 3, 4, 5 mit zunehmendem Einfederweg steigt. Der Volumenausgleich erfolgt bei Einrohrdämpfern über ein Gasvolumen, das um das Volumen der eindringenden Kolbenstange verringert wird. Dies wird nachfolgend anhand der Figur 3 erläutert. Aus der Dämpfergeschwindigkeit wird mit Hilfe eines geeigneten Schätzalgorithmus die Vertikalgeschwindigkeit $v_{Dämpfer}$ am aufbauseitigen Befestigungspunkt der Dämpfer 2, 3, 4 und 5 geschätzt. Als Schätzverfahren bietet sich hier beispielsweise ein Kalman-Filter an. Eine Übersicht über die Funktion des dritten Funktionsblocks 27 wird nachfolgend anhand der figur4 gegeben.

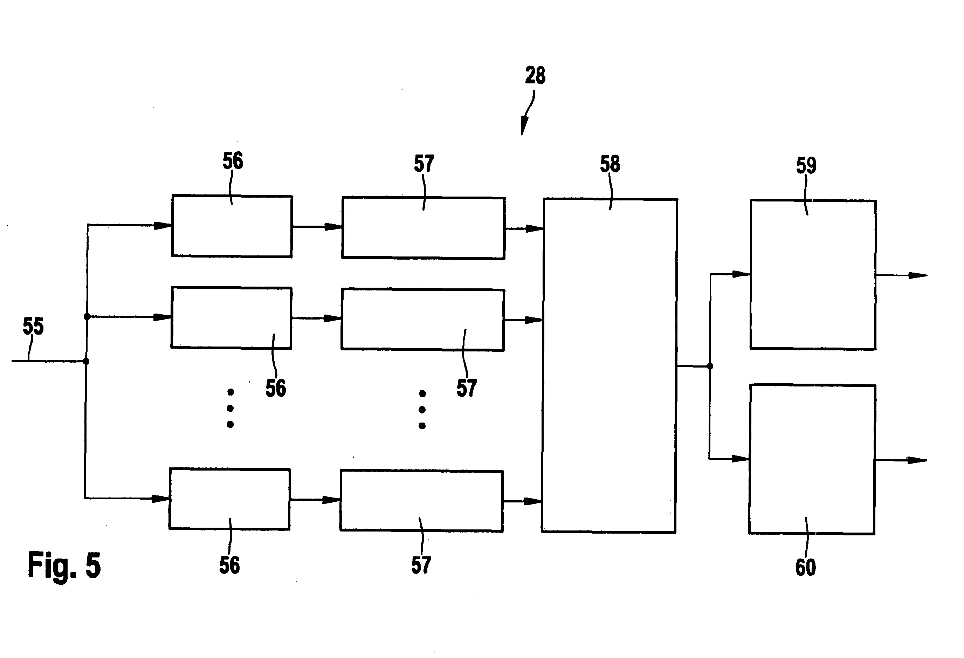

Die aus den Drucksignalen geschätzten Dämpferbewegungsgrößen und/oder die Dämpferkraft werden in einem vierten Funktionsblock 28 und einem fünften Funktionsblock 29 weiterverarbeitet. In dem vierten Funktionsblock 28 wird auf Basis der Dämpferbewegungsgrößen und/oder der Dämpferkraft eine fahrbahnabhängige Bestimmung der Dämpferhärte vorgenommen. Das bedeutet, dass die Dämpferhärte aus der lokalen Bewegung bestimmt wird. Dämpferexterne Größen werden bei dieser Bestimmung nicht herangezogen. Regelziele sind die Reduzierung der Radlastschwankungen und die Komfortverbesserung im Frequenzbereich der Radeigenschwingungen, die im Bereich von etwa 10 bis 15 Hz liegen. Als Algorithmus kommt dabei beispielsweise eine frequenzselektive Ansteuerung in Betracht. Diese wird nachfolgend anhand von Figur 5 dargestellt.

In dem fünften Funktionsblock 29 werden aus den dämpferlokalen Informationen, die der dritte Funktionsblock 27 bereitstellt, Informationen über den Bewegungsmodus des Fahrzeugaufbaus, das heißt über die Hub-, Roll-(=Wank-) und Nickbewegung, bestimmt. Geeignete Beschreibungsgrößen für die Bewegung des Fahrzeugaufbaus sind beispielsweise die Hubgeschwindigkeit $v_z$ im Schwerpunkt des Aufbaus, die Rollrate $dt_{phi}$ und die Nickrate $dt_{theta}$. Die Aggregation erfolgt beispielsweise gemäß den Gleichungen

$$v_z = (v_{FL} + v_{FR} + v_{RL} + v_{RR}) / 4$$

$$dt_{phi} = (-v_{FL} + v_{FR} - v_{RL} + v_{RR}) / (2 \cdot b)$$

$$dt_{theta} = (-v_{FL} - v_{FR} + v_{RL} + v_{RR}) / (2 \cdot L)$$

Dabei bezeichnen $v_{Dämpfer}$ die Vertikalgeschwindigkeit am aufbauseitigen Befestigungspunkt des jeweiligen Dämpfers 2, 3, 4 und 5, b die Spurbreite und L den Radstand. FL steht für den Dämpfer vorne links, FR vorne rechts, RL hinten links und RR hinten rechts.

Diese Schätzgrößen der Aufbaubewegung werden in einem sechsten Funktionsblock 30 verwendet, um eine Regelung der Bewegung des Aufbaus vorzunehmen. Der sechste Funktionsblock 30 weist als Eingangsgrößen Sollwerte 33 der Aufbaubewegung (typischerweise gleich 0) und die aus dem fünften Funktionsblock 29 stammenden Schätzgrößen der Aufbaubewegung, beispielsweise $v_z$, $dt_{phi}$ und $dt_{theta}$ auf. Aus diesen Eingangsgrößen bestimmt der sechste Funktionsblock 30 eine Dämpferhärte, jeweils getrennt nach Zug- und Druckstufe. Analog zu dem zweiten Funktionsblock 26 bestimmt der sechste Funktionsblock 30 also die Dämpferhärte, die notwendig ist, um die globale Bewegung des Kraftfahrzeugs zu dämpfen.

Ein siebter Funktionsblock 31 dient schließlich dazu, die Dämpferhärte, die in dem zweiten Funktionsblock 26 und dem sechsten Funktionsblock 30 bestimmt wurden, zu einer Dämpferhärte zusammenzufassen. Dieses Zusammenfassen erfolgt jeweils für Zug- und Druckstufe der Dämpfer 2, 3, 4 und 5 getrennt. Beispiele für Arbitrierungsansätze, um eine solche Zusammenführung vorzunehmen, sind beispielsweise

$$Zug = max\ \{Zug_{lokal,}\ Zug_{global}\}$$

$$Druck = max\ \{Druck_{lokal},\ Druck_{global}\}$$

$$Zug = Zug_{lokal} + Zug_{global} - Zug_{lokal} \cdot Zug_{global}$$

$$Druck = Druck_{lokal} + Druck_{global} - Druck_{lokal} \cdot Druck_{global}$$

Dabei bezeichnen Zug und Druck jeweils die Stellanforderungen an die Härte des Dämpfers beziehungsweise den Dämpfungsgrad. Dieser wird in einem Wertebereich von 0 bis 1 angegeben. Damit liegt nun in dem siebten Funktionsblock 31 eine Dämpferhärte vor, die zur Dämpfung der globalen Bewegung dienen kann. Diese Dämpferhärte aus dem siebten Funktionsblock 31 wird ebenso wie die Dämpferhärte aus dem vierten Funktionsblock 28 in einen achten Funktionsblock 32 geleitet. Dieser achte Funktionsblock 38 hat also als Eingangsgrößen die Dämpferhärte, die aus der lokalen Bewegung und die Dämpferhärte, die aus der globalen Bewegung bestimmt wurden. In dem achten Funktionsblock 32 werden diese zu einer Gesamtdämpferhärte zusammengefasst. Dies erfolgt analog zu dem siebten Funktionsblock 31 beziehungsweise mit denselben Arbitrierungs-ansätzen. Mittels der in dem achten Funktionsblock 32 bestimmten Gesamtdämpferhärte werden die Dämpfer 2, 3, 4 und 5 eingestellt, wie dies durch den Pfeil 34 symbolisiert ist.

Der fünfte Funktionsblock 29, der sechste Funktionsblock 30 und der siebte Funktionsblock 31 werden in dem Steuergerät 12 durchgeführt, welches beispielsweise zu einem ohnehin vorhandenen Fahrstabilisierungssystem (beispielsweise ESP) gehört. Gegebenenfalls bietet sich auch die Integration der genannten Funktionsblöcke 29, 30, 31 in ein vorhandenes Zentralsteuergerät der Fahrwerk-Domäne an. Falls dieses Zentralsteuergerät über eine erweiterte Intertialsensorik mit Messung der Hubbeschteunigung $a_z$, der Rollrate $dt_{phi}$ und der Nickrate $dt_{theta}$ verfügt, so kann der fünfte Funktionsblock 29, der die Berechnung der Aufbaubewegungsgrößen durchführt, entfallen.

Der dritte Funktionsblock 27, der vierte Funktionsblock 28 und der achte Funktionsblock 32 können in dem Mikroprozessor 7 der Dämpfer 2, 3, 4 und 5 durchgeführt werden.

Die Figur 3 zeigt einen Einrohrdämpfer 35, der beispielsweise als Dämpfer 2, 3, 4 und 5 verwendet werden kann. An dem Einrohrdämpfer 35 sind Mittel (nicht dargestellt) vorgesehen, um den Druck $p_{oben}$ und den Druck $p_{unten}$

zu bestimmen. Der Druck $p_{oben}$ liegt dabei in einer Kammer 36 oberhalb einer Kolbenstange 37 vor, während der Druck $p_{unten}$ in einer Kammer 38 vorliegt. Dargestellt ist in der Figur 3 auch ein in dem Einrohrdämpfer 35 befindliches Gasvolumen 39.

Die Figur 4 zeigt eine Struktur des dritten Funktionsblocks 27. Es wird deutlich, dass dieser zwei Berechnungsstränge 40 und 41 aufweist, wobei der Berechnungsstrang 40 den Druck $p_{oben}$ und der Berechnungsstrang 41 den Druck $p_{unten}$ als Eingangsgröße aufweist. In beiden Berechnungssträngen 40 und 41 wird zunächst eine Offsetkorrektur durchgeführt (Kasten 42), anschließend ein Tiefpassfilter angewandt (Kasten 43) und schließlich eine Plausibilitätsprüfung durchgeführt (Kasten 44). Nachfolgend dem Kasten 44 wird das Ergebnis des Berechnungsstrangs 40 in einen ersten Kanal 45 und das Ergebnis des Berechnungsstrangs 41 in einen zweiten Kanal 46 ausgegeben. In dem ersten Kanal 45 und dem zweiten Kanal 46 liegt also ein bereinigtes Drucksignal für den Druck $p_{oben}$ beziehungsweise $p_{unten}$ vor. Die beiden Drucksignale $p_{oben}$ und $p_{unten}$ werden jeweils als Eingangsgröße für Funktionsblöcke 47, 48 und 49 verwendet. In dem Funktionsblock 47 wird mittels der Drücke eine Schätzung der Dämpferkraft vorgenommen, die dann ebenso wie die Drücke $p_{oben}$ und $p_{unten}$ dem Funktionsblock 48 als Eingangsgröße zugeführt wird. In dem Funktionsblock 48 wird aus diesen drei Größen eine Schätzung der Dämpfergeschwindigkeit durchgeführt.

Der Funktionsblock 49 dient einer Schätzung des Dämpferwegs. Dies kann jedoch nur durchgeführt werden, wenn ein Einrohrdämpfer 35 als Dämpfer 2, 3, 4 oder 5 vorgesehen ist. Nachfolgend dem Funktionsblock 48 ist ein weiterer Funktionsblock 50 vorgesehen, in welchem aus der Dämpfergeschwindigkeit die Schätzung der Vertikalbewegung an dem Befestigungspunkt des Dämpfers 2, 3, 4 oder 5 durchgeführt wird. An einem Ausgang 51 liegt demnach die Dämpferkraft an, an einem Ausgang 52 die Dämpfergeschwindigkeit, an einem Ausgang 53 die Vertikalbewegung an dem Befestigungspunkt des Dämpfers 2, 3, 4 oder 5 und an einem Ausgang 54 der Dämpferweg. Die an den Ausgängen 51, 52, 53 und 54 anliegenden Größen können anschließend als Eingangsgrößen des vierten Funktionsblocks 28 und des fünften Funktionsblocks 29 verwendet werden.

Die Figur 5 zeigt beispielhaft einen Aufbau des vierten Funktionsblocks 28. Dieser bestimmt die Dämpferhärte aus der lokalen Bewegung des Dämpfers 2, 3, 4 oder 5. Als Eingangsgröße dienen dabei, wie vorstehend aufgeführt, die Ausgangsgrößen des dritten Funktionsblocks 27. Diese liegen an einem Eingang 55 an. In dem vierten Funktionsblock 28 wird eine frequenzselektive Ansteuerung als Algorithmus verwendet. Dazu wird zunächst die Dämpferbewegungsgröße über ein oder mehrere Filter (Kasten 56) bewertet. Filter können beispielsweise Bandpassfilter sein. Anschließend wird eine Amplitudenberechnung durchgeführt (Kasten 57). Überschreiten die bestimmten Amplituden im relevanten Frequenzbereich, das heißt am Ausgang des Filters (Kasten 56) definierte Grenzwerte, dann wird eine größere Härte des Dämpfers 2, 3, 4 oder 5 angefordert. Die Ausgangsgrößen der Amplitudenberechnung wird gewichtet (Kasten 58) und aus dem Ergebnis dieser Gewichtung eine Kennlinie für die Zugstufe (Kasten 59) beziehungsweise Druckstufe (Kasten 60) des Dämpfers 2, 3, 4 und 5 bestimmt.

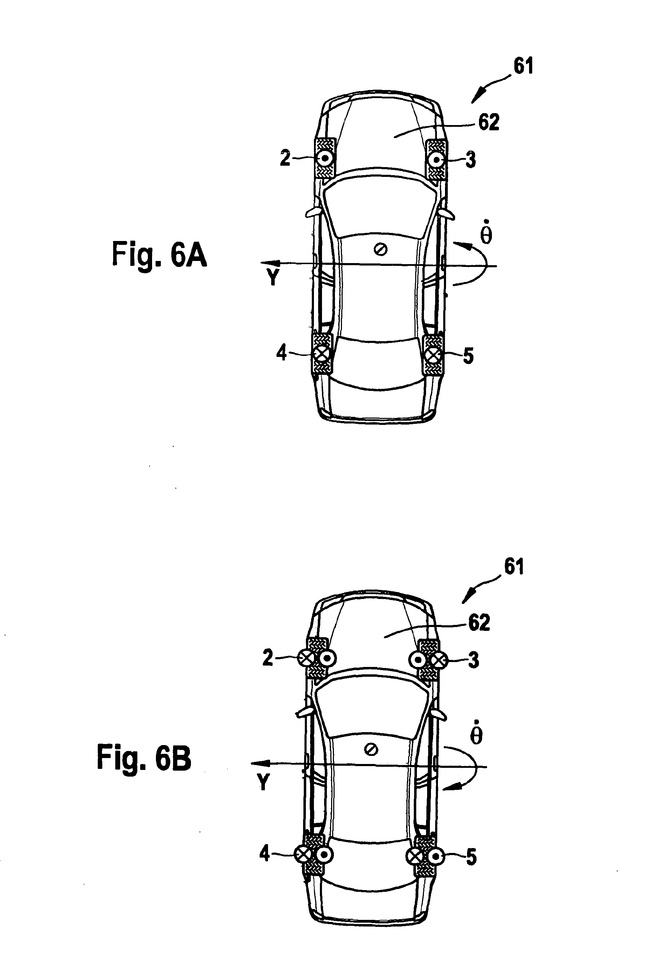

Die Figuren 6A und B zeigen in dem Ausführungsbeispiel ein Kraftfahrzeug 61 mit den Dämpfern 2, 3, 4 und 5. Jeder der Dämpfer 2, 3, 4, 5 weist jeweils ein erstes Ventil zum Verstellen der Härte der Druckstufe sowie ein zweites Ventil zum Verstellen der Härte der Zugstufe auf. Vor einer durch eine erwartete Fahrzeugaufbau-Bewegung des Fahrzeugaufbaus 62 des Kraftfahrzeugs 61 erzeugten Druckbelastung der Dämpfer 2-5 wird das jeweils erste Ventil zum Erhöhen der Härte der Druckstufe und während der erfolgenden Druckbelastung zusätzlich das zweite Ventil zum Erhöhen der Härte der Zugstufe geschaltet. Vor einer durch eine erwartete Fahrzeugaufbau-Bewegung erzeugten Zugbelastung der Dämpfer 2-5 wird entsprechend das (jeweils) zweite Ventil zum Erhöhen der Härte der Zugstufe und während der erfolgenden Zugbelastung das erste Ventil zum Erhöhen der Härte der Druckstufe geschaltet. In dem in den figuren 6A und 6B dargestellten Fall findet ein Bremsvorgang statt, bei dem eine Nickbewegung des Kraftfahrzeugs wie oben beschrieben erfolgt, wobei das Kraftfahrzeug 61 um eine Querachse Y nickt. Während des Bremsvorgangs sind die Dämpfer 2 und 3 somit auf Druck und die Dämpfer 4 und 5 auf Zug belastet. Wird erkannt, dass das Fahrzeug 61 bis zum Stillstand ausgebremst werden soll, so werden kurz vor Stillstand die ersten Ventile der Dämpfer 4 und 5 sowie die zweiten Ventile der Dämpfer 2 und 3 geschaltet, sodass der Dämpfungsgrad der Druckstufe der Dämpfer 4 und 5 sowie der Dämpfungsgrad der Zugstufe der Dämpfer 2 und 3 erhöht ist, wenn der Fahrzeugaufbau 62 nach hinten nickt. Während der fahrzeugaufbau 62 nach hinten nickt, werden zusätzlich das jeweils erste Ventil der Dämpfer 2 und 3 sowie das jeweils zweite Ventil der Dämpfer 4 und 5 geschaltet, sodass die restlichen Dämpferstufen verhärtet sind, wenn der Fahrzeugaufbau wieder nach vorne schwingt beziehungsweise nickt.

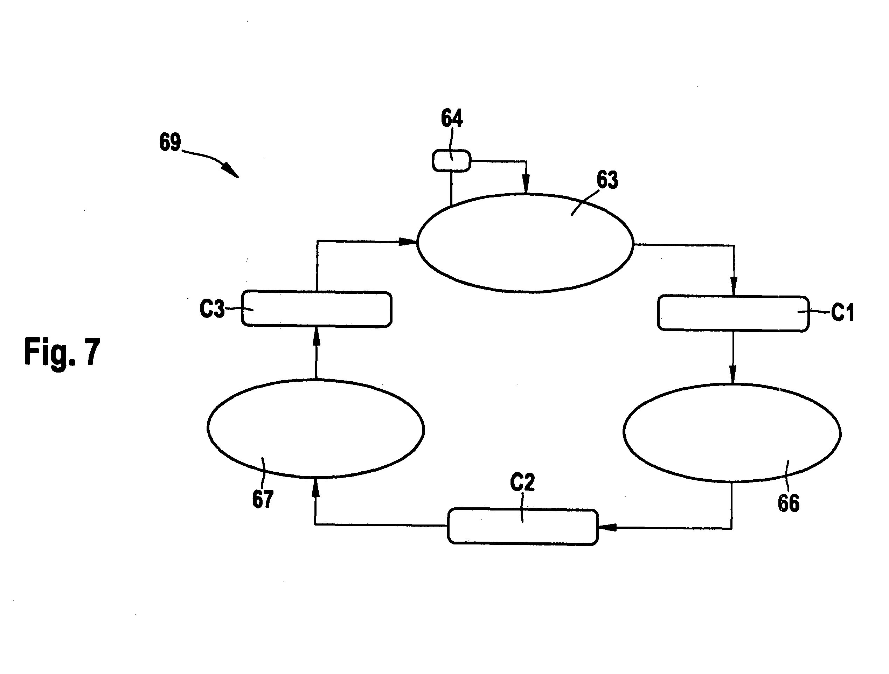

Die allgemeine Strategie lässt sich dabei durch den in Figur 7 dargestellten Zustandsautomaten 69 darstellen. Das Blockschaltbild, das in der Figur 7 dargestellt ist, zeigt schematisch die Durchführung des vorteilhaften Verfahrens zur Fahrwerkregelung. In einem ersten Schritt 63 befinden sich die Dämpfer 2 bis 5 in ihrem Normalzustand. Dabei wird wie durch einen Kasten 64 angedeutet stets der Fahrzeugzustand daraufhin überprüft, ob eine Fahrzeugaufbau-Bewegung, die zu einer Druck- und/oder Zugbelastung der Dämpfer führt, zu erwarten ist. Wird eine Bremsung erkannt, beispielsweise durch Erfassen des Bremspedalwinkels, so werden in einem folgenden Schritt C1 das erste Ventil von den Dämpfern 4 und 5 an der Hinterachse und das zweite Ventil von den Dämpfern 2 und 3 an der Vorderachse zum Erhöhen der Härte geschaltet, wie in der Figur 6A dargestellt, sodass wenn das Fahrzeug in den Stillstand kommt und über die Achse Y nach hinten nickt (Schritt 66), die Druckstufen der Dämpfer 4 und 5 und die Zugstufen der Dämpfer 2 und 3 einen höheren Dämpfungsgrad aufweisen. Wird ein Zurückschwingen erwartet, beziehungsweise wird der Stillstand des Fahrzeugs erreicht, wird in einem weiteren Schritt C2 das zweite Ventil der Dämpfer 4 und 5 und das erste Ventil der Dämpfer 2 und 3 zum Erhöhen der Härte zusätzlich geschaltet, sodass wenn das Fahrzeug in einem Schritt 67 nach vorne zurücknickt, auch die Druckstufen der Dämpfer 2 und 3 sowie die Zugstufen der Dämpfer 4 und 5 verhärtet sind. Wenn innerhalb einer zu bestimmenden/bestimmbaren Zeitspanne keine weiteren oder keine einen bestimmbaren Schwellwert überschreitenden Bewegungen des Fahrzeugaufbaus 62 erfolgen (Schritt C3), werden die ersten und die zweiten Ventile der Dämpfer 2 bis 5 derart geschaltet, dass die Dämpfer 2 bis 5 wieder in ihren Normalzustand (Schritt 63) zurückkehren.

Die Übergangsbedingungen des Zustandsautomaten 69 lassen sich wie folgt definieren:

$$C1 \Rightarrow \begin{cases} V_x < P_1 \\ p_{Brake} > P_{Brake} \end{cases}$$

$$C2 \Rightarrow V_x < P_2$$

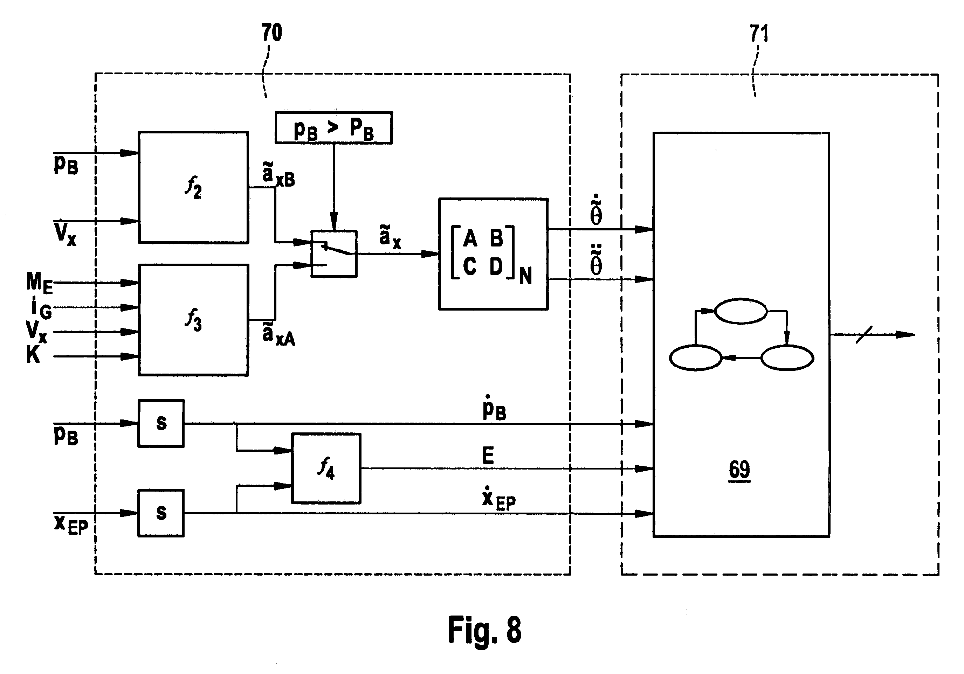

Somit wird die Bremsung in den Stillstand dann erkannt, wenn eine bestimmte Geschwindigkeitsschwelle $P_1$ durch die Fahrzeuglängsgeschwindigkeit $V_x$ unterschritten ist und ein bestimmter Fahrerbremsdruck $p_{Brake}$ oberhalb einer Schwelle $P_{Brake}$ vorliegt. Der Stillstand wird mittels einer zweiten Geschwindigkeitsschwelle $P_2$ definiert, wobei $P_2$ < $P_1$ ist. Der Übergang zum initialen Dämpferzustand kann dadurch getriggert werden, dass entweder die Amplitude der aus einem Modell berechneten Nickrate den Schwellwert unterschreitet und/oder eine gewisse Zeit, wie oben beschrieben, abgelaufen ist. Dabei sind in Figur 8 $p_{Brake}$ als $p_B$ und $P_{Brake}$ als $P_B$ dargestellt. Das oben beschriebene Verfahren erhöht den Fahrkomfort durch die Minimierung der Nickschwingungen nach dem Bremsen in den Stillstand.

Die Dämpfansteuerung für die Nickdämpfung lässt sich somit in drei Zustände unterteilen:

a) Dämpfer 2 bis 5 im normalen Zustand (63),
b) harte Einstellung der Druck- und Zugstufen der Dämpfer der entgegengesetzten Fahrzeugachsen bevor die Nickbewegung in die Richtung der Druckstufe eintritt (66) und
c) harte Einstellung der restlichen Stufen (Druck- und Zugstufen) bevor die Nickbewegung ihre Richtung wechselt (67).

Die Figur 8 zeigt ein Funktionsschaltbild zum Ermitteln und Dämpfen der Nickbewegung des Fahrzeugaufbaus, wobei ein Block 70 die Abschätzung der Fahrzeugaufbau-Bewegung und ein weiterer Block 71 die Ansteuerung der Ventile beziehungsweise der Dämpfer 2 bis 5 betrifft. Der Übergang von a) nach b) wird von den Gradienten des Bremsdrucks $p_{Brake}$, der Gaspedalposition $x_{EnginePedal} = x_{EP}$ beziehungsweise vom Schaltvorgang des Getriebes getriggert, wobei ein Maß für alle drei Vorgänge definiert wird ($f_4$). Der Übergang von b) nach c) geschieht, nachdem die prädizierte Nickrate das Maximum der ersten Halbwelle erreicht. Die harte Einstellung aller Dämpferstufen wird so lange gehalten, bis die Wankschwingung abgeklungen ist. Das Kriterium dafür ist die prädizierte Nickrate, welche aus der stationären Längsbeschleunigung $\tilde{a}_x$ ermittelt wird. Bei der Berechnung der stationären Längsbeschleunigung $\tilde{a}_x$ wird zwischen Bremsfall $\tilde{a}_{xBrake} = \tilde{a}_{xB}$ und Beschleunigungsfall $\tilde{a}_{xAcceleration} = \tilde{a}_{xA}$ unterschieden. Im Bremsfall ist die Beziehung zwischen dem Bremsdruck im Hauptzylinder und der Längsbeschleunigung annähernd linear. Dieser Sachverhalt wird in der Nickfunktion in Form einer linearen Kennlinie $f_2$ ausgenutzt. Außerdem werden der Zustand K einer Kupplung sowie der eingelegte Gang $i_G$ berücksichtigt.

Im Beschleunigungsfall wird die Längsbeschleunigung mittels des stationären Impulssatzes ermittelt:

$$\tilde{a}_{xAcceleration} = \frac{F_x}{m}.$$

Die Antriebskraft $F_x$ wird aus dem Motormoment abzüglich des Luft- und Fahrbahnwiderstands unter vereinfachten Annahmen berechnet:

$$F_x = \underbrace{\frac{1}{r_{dyn}} \cdot \left[ M_{Engine} - M_{nominal}(1-\eta) \right] \cdot i_{Gear} \cdot i_{Diff}}_{\textit{Antriebskraft}} - \underbrace{f_{roll} \cdot m \cdot g}_{\text{Rollwiderstand}} - \underbrace{\frac{\rho_{air}}{2} \cdot c_W \cdot A \cdot V_x^2}_{\text{Luftwiderstand}} - \underbrace{\mu \cdot F_z}_{\text{Reibwiderstand}} ,$$

wobei $r_{dyn}$ der dynamische Reifenradius, $M_{Engine} = M_E$ das Motorantriebsmoment, $i_{Gear} = i_G$ die Übersetzung des Getriebes, $i_{Diff}$ die Übersetzung eines Differentialgetriebes, $f_{roll} \cdot m \cdot g$ der Rollwiderstand, $\frac{\rho_{air}}{2} \cdot c_W \cdot A \cdot V_x^2$ der Luftwiderstand und $\mu \cdot F_z$ den Reibwiderstand darstellen. Für alle Parameter werden Konstanten angenommen. Die Verteilung der Gewichtskraft für die Berechnung des Rollwiderstands wird wie folgt ermittelt:

$$F_z = \frac{h_{CoG}}{L} \cdot m \cdot \tilde{a}_{xK1} + \frac{L_{RA}}{L} \cdot m \cdot g,$$

wobei $h_{CoG}$ die Höhe des Fahrzeugschwerpunkts, L den Achsabstand und $L_{RA}$, $L_{FA}$ den Abstand der Hinterachse beziehungsweise der Vorderachse zum Fahrzeugschwerpunkt darstellen. Die dafür notwendige Längsbeschleunigung kann aus dem letzten Rechenzyklus entnommen (Echtzeitbetriebssystem) werden. Die prädizierte Nickrate ($\dot{\theta}$) berechnet sich aus dem Zustandsmodell und der Längsbeschleunigung als Eingang wie folgt:

$$\begin{bmatrix} \dot{\tilde{\theta}} \\ \ddot{\tilde{\theta}} \end{bmatrix} = A_{HCMY} \cdot \begin{bmatrix} \dot{\tilde{\theta}} \\ \ddot{\tilde{\theta}} \end{bmatrix} + b_{HCMY} \cdot \tilde{a}_x,$$

wobei die Dynamik- und Eingangsmatrix ein Halbfahrzeugmodell N bezüglich der Fahrzeugquerachse Y abbilden. Die Steuerung lässt sich in Form des oben beschriebenen Zustandsautomaten realisieren. Der Zustandsautomat reagiert dabei auf die Änderung des Bremsdrucks, des Gaspedals oder des eingelegten Ganges sowie der prädizierten Nickrate. Der Stellbefehl wird für jeden Dämpfer 2 bis 5 und jede Stufe des jeweiligen Dämpfers 2 bis 5 separat aus dem Maß für die Nickanregung $f_4$ berechnet. Das Maß für die Nickanregung berechnet sich wie folgt:

$$Excitation = \left[ \frac{\dot{p}_{Brake}}{P_{Norm1}} \right]_{-1}^{1} + \left[ \frac{\dot{x}_{GasPedal}}{P_{Norm2}} \right]_{-1}^{1} + f(Gear)$$

Die Einzelterme der Pseudo-Größe "Excitation" E werden zwischen -1 und 1 begrenzt; sie selbst ist als prozentuales Ausmaß der Nickanregung definiert. Die Gradienten des Fahrbremsdrucks $\dot{p}_{Brake}$ sowie Gaspedalwegs $\dot{x}_{GasPedal}$ sind normiert, sodass der Betrag der jeweiligen maximalen Anregung 1 entspricht. Zusätzlich kann die Information über den Schaltvorgang mittels einer diskreten Funktion berücksichtigt werden. Der Stellbefehl des Zustandsautomaten beschreibt dabei eine proportionale Erhöhung der Dämpferhärte, wobei 0 eine maximal weiche und 1 eine maximal harte Einstellung der Dämpfercharakteristik bedeutet. Die Berechnung des Stellbefehls geschieht mittels einer Fuzzy-Kennlinie, welche aus folgender grundsätzlicher Regelbasis abgeleitet wurde:

- WENN Nickanregung Null, DANN bleiben alle Druckstufen und alle Zugstufen passiv;

- WENN Nickanregung positiv, DANN Druckstufen vorne hart und Zugstufen hinten hart;
- WENN Nickanregung negativ, DANN Druckstufen hinten hart und Zugstufen vorne hart

Der Übergang zwischen a) und b) geschieht dann, wenn folgende Bedingung erfolgt ist:

$$\begin{cases} Excitation > P_{Excitation} \\ Vx > P_{Vx} \end{cases}$$

Somit muss das Maß für die Nickanregung Excitiation bzw. E eine bestimmte Schwelle $P_{Excilation}$ überschreiten und eine bestimmte Längsgeschwindigkeit $P_{Vx}$ erreicht sein, um den Übergang von a) nach b) zu triggern. Der Übergang zu c) geschieht dann, wenn die prädizierte Nickrate zu fallen anfängt (Entspannung der Nickschwingung). Dies wird nach der folgenden Formel ermittelt:

$$Sign\left(\dot{\theta}_{Pred}\right) \neq Sign\left(\ddot{\theta}_{Pred}\right) bei \, \Delta t_1 \, .$$

Der Übergang in den Anfangszustand a) findet dann statt, wenn die Nickrate abgeklungen ist. Dafür wird der Betrag der prädizierten Nickrate mit einer bestimmten Schwelle verglichen. Falls die Nickrate eine bestimmte Zeit unterhalb dieser Schwelle liegt, kehren alle Dämpferstufen in den Anfangszustand a) zurück.

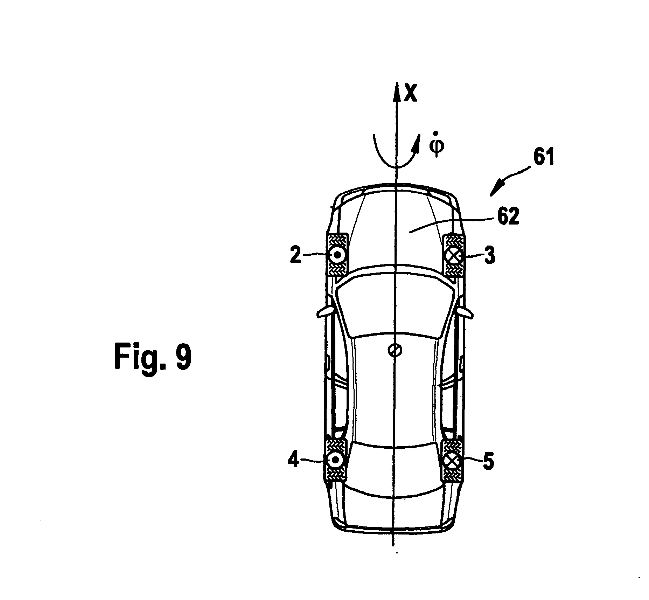

Ebenso kann das erfindungsgemäße Verfahren zur Fahrwerkregelung für Wankdämpfungen angewendet werden, wie in Bezug auf Figur 9 näher erläutert. Die Figur 9 zeigt das Kraftfahrzeug 61 sowie eine Längsachse X des Kraftfahrzeugs 61. Wie oben bereits beschrieben, lässt sich die Dämpferansteuerung auch für die Wankdämpfung in drei Zustände unterteilen:

d) Dämpfer 2 bis 5 im normalen Zustand (keine Dämpferansteuerung),
e) harte Einstellung der Druck- und Zugstufen der entgegengesetzten Fahrzeugseite und
f) harte Einstellung der restlichen Stufen, bevor die Wankbewegung ihre Richtung wechselt.

Der Übergang in den zweiten Zustand e) wird von dem Lenkradwinkelgradienten getriggert, sobald dieser eine bestimmte Schwelle überschreitet. Der Übergang von e) nach f) geschieht, nachdem die prädizierte Wankrate $\dot{\varphi}$ das Minimum der ersten Halbwelle erreicht. Die harte Einstellung aller Stufen wird so lange gehalten, bis die Wankschwingung abgeklungen ist. Das Kriterium dafür ist die prädizierte Wankrate, welche aus der stationären Querbeschleunigung $\ddot{a}_y$ mithilfe des Halbfahrzeugmodells ermittelt wird. Die stationäre Querbeschleunigung lässt sich mit $\delta_{FA}$ = Lenkwinkel an der Vorderachse und $V_{ch}$ = charakteristische Geschwindigkeit aus dem stationären Fahrzeugeinspurmodell wie folgt ermitteln:

$$\tilde{a}_Y = \frac{1}{L} \cdot \frac{V_x^2}{1 + \left(\dfrac{V_x}{V_{ch}}\right)^2} \delta_{FA}$$

Die prädizierte Wankrate berechnet sich aus Zustandsmodell und Querbeschleunigung als Eingang wie folgt:

$$\begin{bmatrix} \dot{\tilde{\varphi}} \\ \ddot{\tilde{\varphi}} \end{bmatrix} = A_{HCM\,X} \cdot \begin{bmatrix} \tilde{\varphi} \\ \dot{\tilde{\varphi}} \end{bmatrix} + b_{HCM\,x} \cdot \tilde{a}_Y \, ,$$

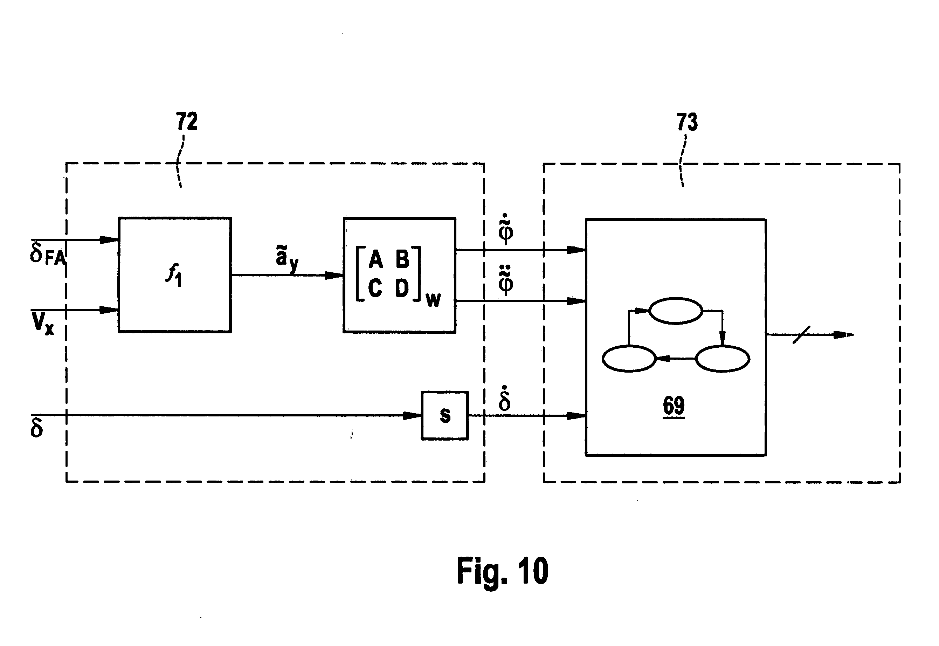

Wobei die Dynamik- und Eingangsmatrix (A und b) ein Halbfahrzeugmodell W bezüglich der Längsachse X abbilden. Die Struktur der gesamten Wankfunktion ist in der Figur 10 dargestellt, wobei die Funktion sich in zwei separate Unterfunktionen trennen lässt: Prädiktion, dargestellt durch einen Block 72 und Steuerung, dargestellt durch einen Block 73. Mittels der Prädiktion der Wankbewegung werden die Ventile der Dämpfer 2 bis 5 frühzeitig aktiviert, bevor sie durch die von der Wankbewegung erzeugten Kräfte belastet werden.

Der in Figur 7 dargestellte Zustandsautomat reagiert bei der Anwendung für Wankbewegungen des Fahrzeugaufbaus auf Änderungen des Lenkradwinkels $\delta$ sowie der prädizierten Wankrate. Der Stellbefehl wird für jeden Dämpfer 2 bis 5 und jede Stufe separat berechnet. Der Stellbefehl beschreibt dabei eine proportionale Erhöhung der Dämpferhärte der jeweiligen Dämpferstufe, wobei 0 eine maximal weiche und 1 eine maximal harte Einstellung der Dämpfercharakteristik bedeutet. Die Berechnung des Stellbefehls geschieht mittels einer Fuzzy-Kennlinie, welche aus folgender grundsätzlicher Regelbasis abgeleitet werden kann:

- WENN Lenkradwinkelgradient Null, DANN bleiben alle Druckstufen und alle Zugstufen passiv (d. h. alle Dämpferstufen haben Standardcharakteristik);
- WENN Lenkradwinkelgradient positiv, DANN Druckstufen links hart und Zugstufen rechts hart;
- WENN Lenkradwinkelgradient negativ, DANN Druckstufen rechts hart und Zugstufen links hart.

Der Zustandsautomat für die Wankfunktion besteht wie bereits gesagt aus den drei Zuständen d) e)f), welche sequenziell durchlaufen werden. Der erste Zustand d) beinhaltet die Initialisierung der Steuerung. Der Übergang zum zweiten Zustand e) findet dann statt, wenn die Wankanregung erkannt ist. Dies ist dann der Fall, wenn folgende Bedingung erfüllt ist:

$$\begin{cases} \left|\ddot{\delta}\right| > P_{\delta} \\ V_x > P_{Vx} \end{cases}$$

Das bedeutet, dass die Lenkwinkelgeschwindigkeit eine bestimmte Schwelle überschreiten und eine bestimmte Fahrzeuglängsgeschwindigkeiterreicht werden muss. Befindet man sich im zweiten Zustand e), werden auf der entgegen der Wankbewegung liegenden Fahrzeugseite die Druckstufen verhärtet. Gleichzeitig werden die Zugstufen der anderen Fahrzeugseite verhärtet. Der Übergang von e) nach f) erfolgt dann, wenn ein Vorzeichenwechsel der Wankrate erkannt ist. Dies wird mittels folgender Bedingung erkannt:

$$Sign(\dot{\varphi}_{Pred}) \neq Sign(\ddot{\varphi}_{Pred}) \; bei \; \Delta t_1$$

Somit wird eine fallende Wankrate mittels Vorzeichenvergleich zwischen prädizierter Wankrate und ihrem Gradienten bestimmt. Beide Vorzeichen müssen während einer bestimmten Zeit unterschiedlich bleiben (Vermeidung von Fehlerkennung wegen Signalrauschen).

Der dritte Zustand f) bedeutet wie auch beim Bremsvorgang die komplette Verhärtung aller Dämpferstufen. Somit wird sichergestellt, dass eine beliebige Wankschwingung maximal gedämpft ist. Die Rückkehr zur Standardeinstellung d) der Dämpfer 2 bis 5 geschieht, nachdem die vermutete Wankbewegung abgeklungen ist. Um den Sachverhalt zu erkennen, wird ein Band für die prädizierte Wankrate definiert, wobei die abgeklungene Wankrate innerhalb dieses Bands liegen sollte. Außerdem wird bei kleinen Längsgeschwindigkeiten auch keine Wankdämpfung erzeugt, weil aufgrund der geringen Dämpfergeschwindigkeiten der Unterschied zwischen Standardeinstellung und harter Einstellung vernachlässigbar ist. Somit kehren alle Dämpferstufen auf die Standardeinstellung zurück, sobald eine bestimmte Geschwindigkeitsschwelle unterschritten ist. Die Bedingung dafür ist wie folgt definiert:

$$\begin{aligned} \left|\dot{\varphi}_{Pred}\right| \leq P_{\varphi} \; bei \; \Delta t_2 \\ V_x < P_{Vx} \end{aligned}$$

Die oben beschriebenen Funktionen bieten eine Vielzahl von Vorteilen für den Fahrer bezüglich Fahrkomfort und Agilität. Zum einen wird durch die Reduzierung der Wankbewegung das Lenkgefühl und auch die Seitenführung verbessert, da das Eigenlenkverhalten des Fahrzeugs verbessert sowie die Schwingungen der Radaufstandskraft minimiert werden. Weiterhin verbessert sich der Fahrkomfort durch die Reduzierung der Nickschwingungen und der menschlichen Empfindlichkeit für Vertikalbeschleunigungen erheblich. Darüber hinaus werden die Traktion und das Bremsverhalten dadurch verbessert, dass die Radlastschwingungen reduziert werden. Zusätzliche Sensoren für die Messung der Bewegung des Fahrzeugaufbaus, wie zum Beispiel Beschleunigungssensoren oder Federwegsensoren, werden nicht benötigt, stattdessen werden bereits vorliegende Signale verwendet. Vorteilhafterweise werden die beiden Stellanforderungen aus der Nick- und der Wankbewegung für jeden einzelnen Dämpfer in geeigneter Weise verknüpft, beispielsweise mit einem MAX-Operator. Jeder Pfad ist unterteilt in die Vorhersage der jeweiligen Bewegung und die Berechnung der Stellanforderung an die Dämpferaktuatoren.

**Patentansprüche**

1. Verfahren zur Fahrwerkregelung eines Kraftfahrzeugs, das mindestens eine einen Fahrzeugaufbau tragende Radaufhängung mit Dämpfern an einer Hinterachse und Dämpfern an einer Vorderachse aufweist, die eine in der Härte verstellbare Zugstufe und eine in der Härte verstellbare Druckstufe aufweisen wobei für eine durch eine bestimmte Fahrzeugaufbau-Bewegung erzeugte Druckbelastung der jeweiligen Dämpfer die Härte der Druckstufe verändert, insbesondere erhöht, und für eine durch die bestimmte Fahrzeugaufbau-Bewegung erzeugte, anschließend folgende Zugbelastung der jeweiligen Dämpfer die Härte der Zugstufe zusätzlich verändert, insbesondere erhöht wird oder wobei für eine durch eine bestimmte Fahrzeugaufbau-Bewegung erzeugte Zugbelastung der jeweiligen Dämpfer die Härte der Zugstufe verändert, insbesondere erhöht, und für eine durch die bestimmte Fahrzeugaufbau-Bewegung erzeugte, anschließend folgende Druckbelastung der jeweiligen Dämpfer die Härte der Druckstufe zusätzlich verändert, insbesondere erhöht wird, wobei die jeweiligen Dämpfer mindestens ein erstes Ventil zum Verstellen der Härte der Druckstufe und mindestens ein zweites Ventil zum Verstellen der Härte der Zugstufe aufweist, und wobei vor einer durch die bestimmte Fahrzeugaufbau-Bewegung erzeugten Druckbelastung der jeweiligen Dämpfer das erste Ventil zum Verändern, insbesondere Erhöhen, der Härte der Druckstufe geschaltet und während der erfolgenden Druckbelastung zusätzlich das zweite Ventil zum Verändern, insbesondere Erhöhen, der Härte der Zugstufe geschaltet wird, oder dass vor einer durch eine bestimmte Fahrzeugaufbau-Bewegung erzeugten Zugbelastung der jeweiligen Dämpfer das zweite Ventil zum Verändern, insbesondere Erhöhen, der Härte der Zugstufe und während der erfolgenden Zugbelastung das erste Ventil zum verändern, insbesondere Erhöhen, der Härte der Druckstufe geschaltet wird, **dadurch gekennzeichnet, Dass** bei einem Bremsvorgang vor dem Stillstand des Kraftfahrzeugs das jeweils erste Ventil von Dämpfern an der Hinterachse und das jeweils zweite Ventil von Dämpfern an der Vorderachse des Kraftfahrzeugs zum Erhöhen der Härte geschaltet werden und dass bei Erreichen des Stillstands das zweite Ventil von den Dämpfern an der Hinterachse und das erste Ventil von den Dämpfern an der Vorderachse des Kraftfahrzeugs zum Erhöhen der Härte zusätzlich geschaltet werden.

2. Verfahren nach einem der vorhergehenden Ansprüche, **dadurch gekennzeichnet, dass** beim Schalten des ersten und/oder des zweiten Ventils zum Einstellen der Härte der jeweiligen Dämpfer eine globale Bewegung des Fahrzeugaufbaus und/oder eine lokale Bewegung der jeweiligen Dämpfer berücksichtigt werden.

3. Verfahren nach Anspruch 2, **dadurch gekennzeichnet, dass** eine zu erwartende globale Bewegung in Abhängigkeit von Lenkradwinkei, Bremspedalstellung, Gaspedalstellung, Soll-Beschleunigung, Soll-Drehmoment und/oder mindestens einer Ist-Zustandsgröße des Kraftfahrzeugs abgeschätzt wird.

4. Verfahren nach Anspruch 2, **dadurch gekennzeichnet, dass** ein eine globale Bewegung auslösender Brems- oder Beschleunigungsvorgang in Abhängigkeit von der Bremspedalstellung und/oder der Gaspedalstellung bestimmt wird.

5. Verfahren nach Anspruch 2, **dadurch gekennzeichnet, dass** eine eine globale Bewegung auslösende Kurvenfahrt in Abhängigkeit vom Lenkradwinkel abgeschätzt wird.

6. Verfahren nach einem der vorhergehenden Ansprüche, **dadurch gekennzeichnet, dass** bei Einleiten einer Kurvenfahrt das erste Ventil von mindestens einem in die Kurve außen liegenden Dämpfer und das zweite Ventil von mindestens einem in der Kurve innen liegenden Dämpfer zum Erhöhen der Härte geschaltet werden, und dass bei erfolgender Kurvenfahrt das zweite Ventil des mindestens einen in der Kurve außen liegenden Dämpfers und das erste Ventil des mindestens einen in der Kurve innen liegenden Dämpfers zum Erhöhen der Härte geschaltet werden.

7. Verfahren nach einem der vorhergehenden Ansprüche, **dadurch gekennzeichnet, dass** erste und/oder das zweite Ventil erst bei Überschreiten eines bestimmbaren Schwellwertes zum Erhöhen der Härte geschaltet werden.

8. Verfahren nach einem der vorhergehenden Ansprüche, **dadurch gekennzeichnet, dass** das erste und/oder das zweite Ventil zum Verringern der Härte geschaltet werden, wenn der Schwellwert über einen bestimmten Zeitraum nicht erreicht wird.

9. Verfahren nach Anspruch 2, **dadurch gekennzeichnet, dass** die lokale Bewegung anhand von mindestens einem Dämpferdruck bestimmt wird.

10. Verfahren nach Anspruch 2, **dadurch gekennzeichnet, dass** die lokale Bewegung eine Vertikalbewegung an einem Befestigungspunkt der jeweiligen Dämpfer ist.

11. Verfahren nach Anspruch 2, **dadurch gekennzeichnet, dass** die lokale Bewegung aus einer Dämpferkraft und/ oder einer Druckdifferenz, insbesondere unter Beachtung einer Kennlinie der jeweiligen Dämpfer berechnet wird.

12. Verfahren nach Anspruch 11, **dadurch gekennzeichnet, dass** die Dämpferkraft und/oder die Druckdifferenz aus einem Druck in einer oberen Kammer der jeweiligen Dämpfer und einem Druck in einer unteren Kammer der jeweiligen Dämpfer bestimmt werden.

13. Verfahren nach einem der vorhergehenden Ansprüche, **dadurch gekennzeichnet, dass** die jeweiligen Dämpfer Einrohrdämpfer sind und insbesondere deren Dämpferwege abgeschätzt werden.

14. Verfahren nach Anspruch 2, **dadurch gekennzeichnet, dass** die lokale Bewegung für hochfrequente Anteile und/ oder die globale Bewegung für niederfrequente Anteile ausgewertet wird.

15. Verfahren nach Anspruch 2, **dadurch gekennzeichnet, dass** aus der lokalen Bewegung und der globalen Bewegung jeweils eine Dämpferhärte für die Druck- und für die Zugstufe bestimmt wird.

16. Verfahren nach Anspruch 15, **dadurch gekennzeichnet, dass** die Dämpferhärte aus der lokalen Bewegung und die Dämpferhärte aus der globalen Bewegung zu einer Gesamtdämpferhärte zusammengefasst werden.

17. Vorrichtung zur Fahrwerkregelung eines Kraftfahrzeugs (61), insbesondere zur Durchführung eines Verfahrens nach einem oder mehreren der vorhergehenden Ansprüche, die mindestens eine einen Fahrzeugaufbau (62) tragende Radaufhängung mit Dämpfern an einer Hinterachse und Dämpfern an einer Vorderachse (2,3,4,5) aufweis, die eine in der Härte verstellbare Zugstufe und eine in der Härte verstellbare Druckstufe aufweisen wobei für eine durch eine bestimmte Fahrzeugaufbau-Bewegung erzeugte Druckbelastung der jeweiligen Dämpfer (2,3,4,5) die Härte der Druckstufe verändert, insbesondere erhöht, und für eine durch die bestimmte Fahrzeugaufbau-Bewegung erzeugte, anschließend folgende Zugbelastung der jeweiligen Dämpfer (2,3,4,5) die Härte der Zugstufe zusätzlich verändert, insbesondere erhöht wird oder wobei für eine durch eine bestimmte Fahrzeugaufbau-Bewegung erzeugte Zugbelastung der jeweiligen Dämpfer (2,3,4,5) die Härte der Zugstufe verändert, insbesondere erhöht, und für eine durch die bestimmte Fahrzeugaufbau-Bewegung erzeugte, anschließend folgende Druckbelastung der jeweiligen Dämpfer (2,3,4,5) die Härte der Druckstufe zusätzlich verändert, insbesondere erhöht wird, wobei die jeweiligen Dämpfer (2,3,4,5) mindestens ein erstes Ventil zum Verstellen der Härte der Druckstufe und mindestens ein zweites Ventil zum Verstellen der Härte der Zugstufe aufweist, und wobei vor einer durch die bestimmte Fahrzeugaufbau-Bewegung erzeugten Druckbelastung der jeweiligen Dämpfer (2,3,4,5) das erste Ventil zum Verändern, insbesondere Erhöhen, der Härte der Druckstufe geschaltet und während der erfolgenden Druckbelastung zusätzlich das zweite Ventil zum Verändern, insbesondere Erhöhen, der Härte der Zugstufe geschaltet wird, oder dass vor einer durch eine bestimmte Fahrzeugaufbau-Bewegung erzeugten Zugbelastung der jeweiligen Dämpfer (2,3,4,5) das zweite Ventil zum Verändern, insbesondere Erhöhen, der Härte der Zugstufe und während der erfolgenden Zugbelastung das erste Ventil zum Verändern, insbesondere Erhöhen, der Härte der Druckstufe geschaltet wird, **dadurch gekennzeichnet, dass** bei einem Bremsvorgang vor dem Stillstand des Kraftfahrzeugs das jeweils erste Ventil von Dämpfern an der Hinterachse und das jeweils zweite Ventil von Dämpfern an der Vorderachse des Kraftfahrzeugs zum Erhöhen der Härte geschaltet werden und dass bei Erreichen des Stillstands das zweite Ventil von den Dämpfern an der Hinterachse und das erste Ventil von den Dämpfern an der Vorderachse des Kraftfahrzeugs zum Erhöhen der Härte zusätzlich geschaltet werden.

18. Vorrichtung nach einem der vorhergehenden Ansprüche, **dadurch gekennzeichnet, dass** die jeweiligen Dämpfer (2,3,4,5) eine Auswerteeinheit (7) und/oder mindestens eine Druckmesseinrichtung (6) aufweisen und/oder mittels der Auswerteeinheit (7) eine Endstufe (8) mindestens eines Ventils (10) der jeweiligen Dämpfer (2,3,4,5) einstellbar ist.

19. Vorrichtung nach einem der vorhergehenden Ansprüche, **dadurch gekennzeichnet, dass** die Auswerteeinheit (7) mit einem vorhandenen, die globale Bewegung abschätzenden Steuergerät (12) des Kraftfahrzeugs über einen Datenbus (11) verbunden ist.

**Claims**

1. Method for the chassis control of a motor vehicle which has at least one wheel suspension system which supports a vehicle body and shock absorbers on a rear axle and shock absorbers on a front axle which have a traction stage of adjustable hardness and a compression stage of adjustable hardness, wherein for a pressure loading of the respective shock absorbers which is generated by a specific vehicle body movement the hardness of the compression stage is changed, in particular increased, and for a subsequent traction loading of the respective shock absorbers which is generated by the specific vehicle body movement the hardness of the traction stage is additionally changed, in particular increased, or wherein for a traction loading of the respective shock absorbers which is generated by a specific vehicle body movement the hardness of the traction stage is changed, in particular increased, and for a subsequent pressure loading of the respective shock absorbers which is generated by the specific vehicle body movement the hardness of the compression stage is additionally changed, in particular increased, wherein the respective shock absorbers have at least a first valve for adjusting the hardness of the compression stage and at least a second valve for adjusting the hardness of the traction stage, and wherein before a pressure loading of the respective shock absorbers which is generated by the specific vehicle body movement the first valve is switched to change, in particular increase, the hardness of the compression stage, and during the pressure loading which takes place the second valve is additionally switched to change, in particular increase, the hardness of the traction stage, or in that before a traction loading of the respective shock absorbers which is generated by a specific vehicle body movement the second valve is switched to change, in particular increase, the hardness of the traction stage, and during the traction loading which takes place the first valve is switched to change, in particular increase, the hardness of the compression stage, **characterized in that** during a braking process before the stationary state of the vehicle the respective first valve of shock absorbers on the rear axle and the respective second valve of shock absorbers on the front axle of the motor vehicle are switched to increase the hardness, and **in that** when the stationary state is reached the second valve of the shock absorbers on the rear axle and the first valve of the shock absorbers on the front axle of the motor vehicle are additionally switched to increase the hardness.

2. Method according to one of the preceding claims, **characterized in that** a global movement of the vehicle body and/or a local movement of the respective shock absorbers are taken into account in the switching of the first and/or of the second valve for setting the hardness of the respective shock absorbers.

3. Method according to Claim 2, **characterized in that** an expected global movement is estimated as a function of the steering wheel angle, brake pedal position, accelerator pedal position, setpoint acceleration, setpoint torque and/or at least one actual state variable of the motor vehicle.

4. Method according to Claim 2, **characterized in that** a braking process or acceleration process which triggers a global movement is determined as a function of the brake pedal position and/or the accelerator pedal position.

5. Method according to Claim 2, **characterized in that** cornering which triggers a global movement is estimated as a function of the steering wheel angle.

6. Method according to one of the preceding claims, **characterized in that** when cornering is initiated the first valve of at least one shock absorber which is on the outside of the bend and the second valve of at least one shock absorber which is on the inside of the bend are switched to increase the hardness, and **in that** when cornering is taking place the second valve of the at least one shock absorber which is on the outside of the bend and the first valve of the at least one shock absorber which is on the inside of the bend are switched to increase the hardness.

7. Method according to one of the preceding claims, **characterized in that** the first and/or the second valve are not switched to increase the hardness until a threshold value which can be determined is exceeded.

8. Method according to one of the preceding claims, **characterized in that** the first and/or the second valve are switched to reduce the hardness if the threshold value is not reached over a specific time period.

9. Method according to Claim 2, **characterized in that** the local movement is determined on the basis of at least one shock absorber pressure.

10. Method according to Claim 2, **characterized in that** the local movement is a vertical movement at an attachment point of the respective shock absorbers.

11. Method according to Claim 2, **characterized in that** the local movement is calculated from a shock absorber force and/or a pressure difference, in particular taking into account a characteristic curve of the respective shock absorbers.

12. Method according to Claim 11, **characterized in that** the shock absorber force and/or the pressure difference are/is determined from a pressure in an upper chamber of the respective shock absorbers and a pressure in a lower chamber of the respective shock absorbers.

13. Method according to one of the preceding claims, **characterized in that** the respective shock absorbers are single-tube shock absorbers, and in particular the shock absorber travel thereof is estimated.

14. Method according to Claim 2, **characterized in that** the local movement is evaluated for high frequency components and/or the global movement is evaluated for low frequency components.

15. Method according to Claim 2, **characterized in that** a shock absorber hardness for the compression stage and for the traction stage is respectively determined from the local movement and the global movement.

16. Method according to Claim 15, **characterized in that** the shock absorber hardness from the local movement and the shock absorber hardness from the global movement are combined to form a total shock absorber hardness.

17. Device for the chassis control of a motor vehicle (61), in particular for carrying out a method according to one or more of the preceding claims, which has at least one wheel suspension system which supports a vehicle body (62) and shock absorbers on a rear axle and shock absorbers on a front axle (2, 3, 4, 5) which have a traction stage of adjustable hardness and a compression stage of adjustable hardness, wherein for a pressure loading of the respective shock absorbers (2, 3, 4, 5) which is generated by a specific vehicle body movement the hardness of the compression stage is changed, in particular increased, and for a subsequent traction loading of the respective shock absorbers (2, 3, 4, 5) which is generated by the specific vehicle body movement the hardness of the traction stage is additionally changed, in particular increased, or wherein for a traction loading of the respective shock absorbers (2, 3, 4, 5) which is generated by a specific vehicle body movement the hardness of the traction stage is changed, in particular increased, and for a subsequent pressure loading of the respective shock absorbers (2, 3, 4 5) which is generated by the specific vehicle body movement the hardness of the compression stage is additionally changed, in particular increased, wherein the respective shock absorbers (2, 3 4, 5) have at least a first valve for adjusting the hardness of the compression stage and at least a second valve for adjusting the hardness of the traction stage, and wherein before a pressure loading of the respective shock absorbers (2, 3, 4, 5) which is generated by the specific vehicle body movement the first valve is switched to change, in particular increase, the hardness of the compression stage, and during the pressure loading which takes place the second valve is additionally switched to change, in particular increase, the hardness of the traction stage, or in that before a traction loading of the respective shock absorbers (2, 3, 4, 5) which is generated by a specific vehicle body movement the second valve is switched to change, in particular increase, the hardness of the traction stage, and during the traction loading which takes place the first valve is switched to change, in particular increase, the hardness of the compression stage, **characterized in that** during a braking process before the stationary state of the vehicle the respective first valve of shock absorbers on the rear axle and the respective second valve of shock absorbers on the front axle of the motor vehicle are switched to increase the hardness, and **in that** when the stationary state is reached the second valve of the shock absorbers on the rear axle and the first valve of the shock absorbers on the front axle of the motor vehicle are additionally switched to increase the hardness.

18. Device according to one of the preceding claims, **characterized in that** the respective shock absorbers (2, 3, 4, 5) have an evaluation unit (7) and/or at least one pressure-measuring device (6), and/or an output stage (8) of at least one valve (10) of the respective shock absorbers (2, 3, 4, 5) can be set by means of the evaluation unit (7).

19. Device according to one of the preceding claims, **characterized in that** the evaluation unit (7) is connected to a control unit (12) of the motor vehicle via a databus (11), said control device (12) being present and estimating the global movement.

**Revendications**

1. Procédé de régulation du train de roulement d'un véhicule automobile qui présente au moins une suspension de roue portant le châssis du véhicule et présentant des amortisseurs sur un essieu arrière et des amortisseurs sur un essieu avant,
les amortisseurs présentant un étage de traction de dureté ajustable et un étage de compression de dureté ajustable,
une sollicitation en compression de chaque amortisseur résultant d'un déplacement défini du châssis du véhicule modifiant la dureté de l'étage de compression et en particulier augmentant cette dureté,
une sollicitation suivante en traction de chaque amortisseur résultant du déplacement défini du châssis du véhicule modifiant de plus la dureté de l'étage de traction et en particulier augmentant cette dureté,
une sollicitation en traction de chaque amortisseur résultant d'un déplacement défini du châssis du véhicule modifiant la dureté de l'étage de traction et augmentant en particulier cette dureté et
une sollicitation suivante en compression de chaque amortisseur résultant du déplacement défini du châssis du véhicule modifiant de plus la dureté de l'étage de compression et en particulier augmentant cette dureté,
chaque amortisseur présentant au moins une première soupape d'ajustement de la dureté de l'étage de compression et au moins une deuxième soupape d'ajustement de la dureté de l'étage de traction,
la première soupape étant branchée pour modifier et en particulier augmenter la dureté de l'étage de compression avant une sollicitation en compression de chaque amortisseur résultant du déplacement défini du châssis du véhicule, et la deuxième soupape étant de plus branchée pour modifier et en particulier augmenter la dureté de l'étage de traction pendant la sollicitation en compression qui suit ou
la deuxième soupape étant branchée pour modifier et en particulier augmenter la dureté de l'étage de traction avant une sollicitation en traction de chaque amortisseur résultant d'un déplacement défini du châssis du véhicule, et la première soupape étant branchée pour modifier et en particulier augmenter la dureté de l'étage de compression pendant la sollicitation en traction qui suit,
**caractérisé en ce que**
lors d'une opération de freinage, la première soupape de chacun des amortisseurs de l'essieu arrière et la deuxième soupape de chacun des amortisseurs de l'essieu avant du véhicule automobile sont branchées avant l'arrêt du véhicule automobile, pour augmenter la dureté et
**en ce que** la deuxième soupape des amortisseurs de l'essieu arrière et la première soupape des amortisseurs de l'essieu avant du véhicule automobile sont de plus branchées lorsque l'arrêt est atteint, pour augmenter la dureté.

2. Procédé selon la revendication précédente, **caractérisé en ce que** lors du branchement de la première et de la deuxième soupape en vue du réglage de la dureté de chaque amortisseur, un déplacement global du châssis du véhicule et/ou un déplacement local de chaque amortisseur sont pris en compte.

3. Procédé selon la revendication 2, **caractérisé en ce qu'**un déplacement global attendu est estimé en fonction de l'angle du volant, de la position de la pédale de frein, de la position de la pédale d'accélérateur, de l'accélération de consigne, du couple de rotation de consigne et/ou d'au moins une grandeur d'état effective du véhicule automobile.

4. Procédé selon la revendication 2, **caractérisé en ce qu'**une opération de freinage ou d'accélération qui entraîne un déplacement global est déterminée en fonction de la position de la pédale de frein et/ou de la position de la pédale d'accélération.

5. Procédé selon la revendication 2, **caractérisé en ce qu'**un déplacement en virage qui entraîne un déplacement global est estimé en fonction de l'angle du volant.

6. Procédé selon l'une des revendications précédentes, **caractérisé en ce que** lors de l'entrée dans un virage, la première soupape d'au moins un amortisseur situé à l'extérieur dans le virage et la deuxième soupape d'au moins un amortisseur situé à l'intérieur dans le virage sont branchées pour augmenter la dureté et **en ce que** lorsque le déplacement en virage est terminé, la deuxième soupape du ou des amortisseurs situés à l'extérieur dans le virage et la première soupape du ou des amortisseurs situés à l'intérieur dans le virage sont branchées pour augmenter la dureté.

7. Procédé selon l'une des revendications précédentes, **caractérisé en ce que** la première et/ou la deuxième soupape ne sont branchées pour augmenter la dureté que si une valeur de seuil prédéterminée est dépassée.

8. Procédé selon l'une des revendications précédentes, **caractérisé en ce que** la première et/ou la deuxième soupape sont branchées pour diminuer la dureté si la valeur de seuil n'a pas été atteinte pendant une durée définie.

9. Procédé selon la revendication 2, **caractérisé en ce que** le déplacement local est déterminé à l'aide d'au moins une pression d'amortisseur.

10. Procédé selon la revendication 2, **caractérisé en ce que** le déplacement local est un déplacement vertical en un point de fixation de chaque amortisseur.

11. Procédé selon la revendication 2, **caractérisé en ce que** le déplacement local est calculé à partir de la force d'un amortisseur et/ou d'une différence de pression, en particulier en tenant compte d'une ligne caractéristique de chaque amortisseur.

12. Procédé selon la revendication 11, **caractérisé en ce que** la force d'amortisseur et/ou la différence de pression sont déterminées à partir de la pression qui règne dans une chambre supérieure de chaque amortisseur et de la pression qui règne dans une chambre inférieure de chaque amortisseur.

13. Procédé selon l'une des revendications précédentes, **caractérisé en ce que** chaque amortisseur est un amortisseur à un tube dont la course est en particulier estimée.

14. Procédé selon la revendication 2, **caractérisé en ce que** la partie à haute fréquence des déplacements locaux et/ou la partie à basse fréquence des déplacements globaux sont évaluées.

15. Procédé selon la revendication 2, **caractérisé en ce qu'**une dureté d'amortisseur est déterminée pour l'étage de compression et pour l'étage de traction à partir du déplacement local et du déplacement global.

16. Procédé selon la revendication 15, **caractérisé en ce que** les duretés des amortisseurs résultant des déplacements locaux et les duretés des amortisseurs résultant des déplacements globaux sont rassemblées en une dureté globale d'amortisseur.

17. Dispositif de régulation du train de roulement d'un véhicule automobile (61), en particulier en vue de l'exécution d'un procédé selon l'une ou plusieurs des revendications précédentes, la régulation présentant au moins une suspension de roue qui porte le châssis (62) du véhicule et qui présente des amortisseurs (2, 3, 4, 5) sur l'essieu arrière et sur l'essieu avant,
les amortisseurs présentant un étage de traction de dureté ajustable et un étage de compression de dureté ajustable,
une sollicitation en compression de chaque amortisseur (2, 3, 4, 5) résultant d'un déplacement défini du châssis du véhicule modifiant la dureté de l'étage de compression et en particulier augmentant cette dureté,
une sollicitation suivante en traction de chaque amortisseur (2, 3, 4, 5) résultant du déplacement défini du châssis du véhicule modifiant de plus la dureté de l'étage de traction et en particulier augmentant cette dureté,
une sollicitation en traction de chaque amortisseur (2, 3, 4, 5) résultant d'un déplacement défini du châssis du véhicule modifiant la dureté de l'étage de traction et augmentant en particulier cette dureté et
une sollicitation suivante en compression de chaque amortisseur (2, 3, 4, 5) résultant du déplacement défini du châssis du véhicule modifiant de plus la dureté de l'étage de compression et en particulier augmentant cette dureté,
chaque amortisseur (2, 3, 4, 5) présentant au moins une première soupape d'ajustement de la dureté de l'étage de compression et au moins une deuxième soupape d'ajustement de la dureté de l'étage de traction,
la première soupape étant branchée pour modifier et en particulier augmenter la dureté de l'étage de compression avant une sollicitation en compression de chaque amortisseur (2, 3, 4, 5) résultant du déplacement défini du châssis du véhicule, et la deuxième soupape étant de plus branchée pour modifier et en particulier augmenter la dureté de l'étage de traction pendant la sollicitation en compression qui suit ou
la deuxième soupape étant branchée pour modifier et en particulier augmenter la dureté de l'étage de traction avant une sollicitation en traction de chaque amortisseur (2, 3, 4, 5) résultant d'un déplacement défini du châssis du véhicule, et la première soupape étant branchée pour modifier et en particulier augmenter la dureté de l'étage de compression pendant la sollicitation en traction qui suit,
**caractérisé en ce que**
lors d'une opération de freinage, la première soupape de chacun des amortisseurs de l'essieu arrière et la deuxième soupape de chacun des amortisseurs de l'essieu avant du véhicule automobile sont branchées avant l'arrêt du véhicule automobile, pour augmenter la dureté et
**en ce que** la deuxième soupape des amortisseurs de l'essieu arrière et la première soupape des amortisseurs de l'essieu avant du véhicule automobile sont de plus branchées lorsque l'arrêt est atteint, pour augmenter la dureté.

18. Dispositif selon la revendication précédente, **caractérisé en ce que** chaque amortisseur (2, 3, 4, 5) présente une unité d'évaluation (7) et/ou au moins un dispositif (6) de mesure de pression et/ou **en ce qu'**un étage final (8) d'au moins une soupape (10) de chaque amortisseur (2, 3, 4, 5) peut être ajusté au moyen de l'unité d'évaluation (7).

19. Dispositif selon l'une des revendications précédentes, **caractérisé en ce que** l'unité d'évaluation (7) est reliée par un bus (11) de données à un appareil existant (12) de commande du véhicule automobile qui estime le déplacement global.

**Fig. 1**

**Fig. 2**

35

2, 3, 4, 5

36

37

38

39

# Fig. 3

Fig. 4

**Fig. 5**

**Fig. 6A**

**Fig. 6B**

Fig. 7

EP 2 393 677 B1

Fig. 8

Fig. 9

EP 2 393 677 B1

**Fig. 10**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 4112004 C2
- EP 1391332 A2